(19) Europäisches Patentamt
European Patent Office
Office européen des brevets

(11) **EP 4 332 074 A1**

(12) **EUROPEAN PATENT APPLICATION**
published in accordance with Art. 153(4) EPC

(43) Date of publication:
**06.03.2024 Bulletin 2024/10**

(21) Application number: **22795735.4**

(22) Date of filing: **25.04.2022**

(51) International Patent Classification (IPC):
**C04B 41/80** $^{(2006.01)}$   **A61C 5/70** $^{(2017.01)}$
**A61C 13/083** $^{(2006.01)}$   **C04B 35/488** $^{(2006.01)}$

(52) Cooperative Patent Classification (CPC):
**C04B 35/486; A61C 5/70; A61C 13/083;**
**C01G 25/00; C04B 35/48; C04B 35/488;**
**C04B 35/62655; C04B 35/64; C04B 41/80;**
C04B 2235/3217; C04B 2235/3224;
C04B 2235/3225; C04B 2235/3229;
C04B 2235/3241; C04B 2235/3246;   (Cont.)

(86) International application number:
**PCT/JP2022/018763**

(87) International publication number:
**WO 2022/230822 (03.11.2022 Gazette 2022/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.04.2021   JP 2021076347**

(71) Applicant: **Tosoh Corporation**
**Yamaguchi 746-8501 (JP)**

(72) Inventors:
• USHIO, Yuki
  **Shunan-shi Yamaguchi 746-8501 (JP)**
• FUJISAKI, Hiroyuki
  **Shunan-shi Yamaguchi 746-8501 (JP)**
• HIGUCHI, Yuya
  **Shunan-shi Yamaguchi 746-8501 (JP)**
• NAGAYAMA, Hitoshi
  **Shunan-shi Yamaguchi 746-8501 (JP)**

(74) Representative: **Müller-Boré & Partner**
**Patentanwälte PartG mbB**
**Friedenheimer Brücke 21**
**80639 München (DE)**

(54) **MANUFACTURING METHOD OF SINTERED BODY**

(57) Provided is a method for manufacturing a sintered body that uses atmospheric pressure sintering in an atmospheric atmosphere and allows the time required for sintering to be reduced. Even with this manufacturing method, the sintered body obtained can have a color tone visually equivalent to that of a sintered body obtained using atmospheric pressure sintering that requires 5 hours or longer.

The method for manufacturing a sintered body includes the step of subjecting a sintered body of zirconia containing a coloring element to heat treatment at 600°C or higher and 1200°C or lower.

EP 4 332 074 A1

**(Cont. next page)**

(52) Cooperative Patent Classification (CPC): (Cont.)
C04B 2235/3272; C04B 2235/3275;
C04B 2235/3279; C04B 2235/3281;
C04B 2235/5409; C04B 2235/5436;
C04B 2235/604; C04B 2235/656;
C04B 2235/6562; C04B 2235/6565;
C04B 2235/6567; C04B 2235/9661

**Description**

TECHNICAL FIELD

The present disclosure relates to a method for manufacturing a sintered body of zirconia containing a coloring element and particularly to a method for manufacturing a sintered body of zirconia containing a coloring element that is obtained by sintering at atmospheric pressure.

BACKGROUND ART

The use of sintered bodies of zirconia containing a coloring element, which have been used for applications such as structural materials, is rapidly expanding to applications that require aesthetic value such as decorative members of portable electronic devices such as their external members and dental materials such as dental prostheses.

From the viewpoint of ease of composition control and manufacturing cost, a sintered body of zirconia containing a coloring element is manufactured by a sintering method, i.e., so-called atmospheric pressure sintering in an atmospheric atmosphere, in which the zirconia is heated to a sintering temperature (maximum end-point temperature) at atmospheric pressure in an atmospheric atmosphere, held at the sintering temperature for several hours and then cooled to near room temperature (for example, Patent Documents 1 and 2), unless it is difficult to manufacture the sintered body. A sintering cycle using the atmospheric pressure sintering generally requires 5 hours or longer since a temperature of 1400 to 1600°C is required to sinter zirconia.

In recent years, sintering furnaces (sintering ovens) for manufacturing zirconia sintered bodies that enable atmospheric pressure sintering in which zirconia is held at a sintering temperature (maximum end-point temperature) for several tens of minutes to shorter than 1 hour (this atmospheric pressure sintering is hereinafter referred to also as "short-time sintering") are being commercialized (for example, Patent Document 3).

PRIOR ART DOCUMENTS

PATENT DOCUMENTS

Patent Document 1: JP-A-2016-026990
Patent Document 2: WO2020/196650
Patent Document 3: WO2012/057829

DISCLOSURE OF INVENTION

TECHNICAL PROBLEM

It is an object of the present disclosure to provide a sintered body manufacturing method that uses atmospheric pressure sintering in an atmospheric atmosphere and allows the time required for sintering to be reduced. Even with this manufacturing method, the sintered body obtained can have a color tone visually equivalent to that of a sintered body obtained using atmospheric pressure sintering that requires 5 hours or longer (this sintering is hereinafter referred to also as "long-time sintering").

SOLUTION TO PROBLEM

The present inventors have found the following problem. The long-time sintering and the short-time sintering are similar and are both performed in an atmospheric atmosphere. However, when a zirconia composition used for the long-time sintering is used for the short-time sintering without any treatment, the aesthetic appearance, in particular the color tone, of the sintered body obtained differs significantly from that of a sintered body obtained using the long-time sintering. Moreover, the inventors have found that, by subjecting a colored zirconia sintered body obtained by short-time sintering to specific treatment, the resulting sintered body has an aesthetic appearance visually equivalent to that of a colored zirconia sintered body obtained by conventional long-time sintering although the production time in the short-time sintering is sufficiently shorter than that in the long-time sintering.

The present invention is as described in the claims, and the summary of the present disclosure is as follows.

[1] A method for manufacturing a sintered body, the method comprising a heat treatment step of subjecting a sintered body of zirconia containing a coloring element to heat treatment at 600°C or higher and 1200°C or lower.

[2] The method for manufacturing according to [1], wherein the sintered body of the zirconia containing the coloring element is a sintered body in the state of having been sintered by atmospheric pressure sintering.

[3] The method for manufacturing according to [1] or [2], wherein the sintered body of the zirconia containing the coloring element is a sintered body in the state of having been sintered in an oxidizing atmosphere.

[4] The method for manufacturing according to any one of [1] to [3], wherein, in the heat treatment, the sintered body is held at a heat treatment temperature of 600°C or higher and 1200°C or lower.

[5] The method for manufacturing according to any one of [1] to [4], wherein the temperature range of the heat treatment is within a temperature range of ±50°C.

[6] The method for manufacturing according to any one of [1] to [5], wherein a holding time at the temperature of the heat treatment is shorter than 2 hours.

[7] The method for manufacturing according to any one of [1] to [6], wherein an atmosphere of the heat treatment is an oxidizing atmosphere.

[8] The method for manufacturing according to any one of [1] to [7], wherein the heat treatment step is the step of placing the sintered body of the zirconia containing the coloring element in a firing furnace heated to the temperature of the heat treatment to thereby subject the sintered body to the heat treatment.

[9] The method for manufacturing according to any one of [1] to [7], the method further comprising, before the heat treatment step, the step of sintering colored zirconia in an oxidizing atmosphere to thereby obtain the sintered body of the zirconia containing the coloring element.

[10] The method for manufacturing according to any one of [1] to [7] and [9], wherein the heat treatment step is the step of cooling the sintered body held at a sintering temperature to the temperature of the heat treatment and holding the sintered body at the temperature of the heat treatment to perform the heat treatment.

[11] The method for manufacturing according to any one of [1] to [10], wherein the sintered body obtained through the heat treatment step is at least any of

a colored zirconia sintered body that has a lightness different by 5 or less from a lightness of the sintered body of the zirconia containing the coloring element before the heat treatment step and that has a chroma higher by 0.3 or more than a chroma of the sintered body of the zirconia containing the coloring element before the heat treatment step, and

a colored zirconia sintered body that has a lightness different by more than 5 from the lightness of the sintered body of the zirconia containing the coloring element before the heat treatment step and that has a chroma different by 10 or less from the chroma of the sintered body of the zirconia containing the coloring element before the heat treatment step.

[12] The method for manufacturing according to any one of [1] to [11], wherein the coloring element is at least one selected from the group consisting of iron (Fe), cobalt (Co), manganese (Mn), nickel (Ni), copper (Cu), titanium (Ti), chromium (Cr), cerium (Ce), praseodymium (Pr), neodymium (Nd), erbium (Er), terbium (Tb) and ytterbium (Yb).

[13] The method for manufacturing according to any one of [1] to [12], wherein the zirconia contains a stabilizing element.

[14] The method for manufacturing according to [13], wherein the stabilizing element includes at least yttrium.

[15] The method for manufacturing according to any one of [1] to [14], wherein the zirconia contains at least yttrium.

[16] The method for manufacturing according to any one of [1] to [15], wherein the sintered body of the zirconia containing the coloring element contains alumina ($Al_2O_3$).

ADVANTAGEOUS EFFECTS OF INVENTION

The present disclosure can provide a sintered body manufacturing method that uses atmospheric pressure sintering in an atmospheric atmosphere and allows the time required for sintering to be shortened. Even with this manufacturing method, the sintered body obtained can have a color tone visually equivalent to that of a sintered body obtained using long-time sintering.

DESCRIPTION OF EMBODIMENTS

The present disclosure will be described using an exemplary embodiment. Main terms used in the embodiment are as follows.

The term "zirconia containing a coloring element" refers to a composition composed essentially of the coloring element and zirconia (zirconium dioxide, $ZrO_2$). This composition is, for example, at least one selected from the group consisting of a powder, a granular powder, a green body, a calcined body and a sintered body, each of which contains the coloring element and zirconia, and is preferably at least one selected from the group consisting of a powder, a granular powder, a green body, a calcined body and a sintered body, each of which contains the coloring element and zirconia serving as a matrix (base material).

The term "composition" refers to a material having a specific chemical composition. This material is, for example, at least one selected from the group consisting of a powder, a granular powder, a green body, a calcined body and a sintered body. The term "zirconia composition" refers to a composition composed essentially of zirconia and to a composition containing zirconia as a matrix (base material). The term "colored zirconia composition" refers to a zirconia composition containing a coloring element.

The term "powder" refers to a collection of a plurality of powdery particles and a composition having fluidity. The term "zirconia powder" refers to a powder composed essentially of zirconia and to a powder containing zirconia as a matrix (base material), and the term "colored zirconia powder" refers to a zirconia powder containing a coloring element.

The term "granular powder" refers to a collection of aggregates of powder particles and a composition having fluidity and particularly to a composition having higher fluidity than powders. The term "zirconia granular powder" refers to a granular powder composed essentially of zirconia and to a granular powder containing zirconia as a matrix (base material). The term "colored zirconia granular powder" refers to a zirconia granular powder containing a coloring element.

The term "green body" refers to a composition formed of powder particles aggregated by physical force and having a certain shape and particularly to a composition that has not been subjected to heat treatment. The term "zirconia green body" refers to a green body composed essentially of zirconia and to a green body containing zirconia as a matrix (base material). The term "colored zirconia green body" refers to a zirconia green body containing a coloring element. The term green body is used interchangeably with the term "compacted body."

The term "calcined body" refers to a composition formed of fused particles and having a certain shape and to a composition subjected to heat treatment at a temperature lower than sintering temperature. The term "zirconia calcined body" refers to a calcined body composed essentially of zirconia and to a calcined body containing zirconia as a matrix (base material). The term "colored zirconia calcined body" refers to a zirconia calcined body containing a coloring element. The term calcined body is used interchangeably with a "pre-sintered body" and a "semi-sintered body."

The term "sintered body" refers to a composition formed of crystal grains and to a composition subjected to heat treatment at a temperature equal to or higher than sintering temperature. The term "zirconia sintered body" refers to a sintered body composed essentially of zirconia and to a sintered body containing zirconia as a matrix (base material). The term "colored zirconia sintered body" refers to a zirconia sintered body containing a coloring element.

The term "stabilizing element" refers to an element that dissolves in zirconia to form a solid solution and has the function of stabilizing the crystal phase of zirconia. The term "coloring element" refers to an element having the function of coloring zirconia. An element having both the function of the stabilizing element and the function of the coloring element is referred to also as a "coloring-stabilizing element."

In a zirconia composition, the "amount of a stabilizing element" is the molar ratio [mol%] of the stabilizing element to the total moles of zirconia and the stabilizing element on an oxide basis, and the "amount of a coloring element" is the ratio (mass%) of the mass [g] of the coloring element on an oxide basis to the mass [g] of the zirconia composition on an oxide basis. The "amount of an additive component" is the ratio [mass%] of the mass [g] of the additive component on an oxide basis to the mass [g] of the zirconia composition on an oxide basis. For example, in a zirconia composition containing alumina as an additive component, iron and titanium as coloring elements, terbium as a coloring-stabilizing element and yttrium as a stabilizing element, the amount of the stabilizing elements can be determined from $\{(Tb_4O_7 + Y_2O_3)$ [mol] / $(Tb_4O_7 + Y_2O_3 + ZrO_2)$ [mol]$\} \times 100$, and the amount of the coloring elements can be determined from $\{(Fe_2O_3 + Tb_4O_7 + TiO_2)\}$ [g] / $(Fe_2O_3 + Tb_4O_7 + Y_2O_3 + ZrO_2 + Al_2O_3 + TiO_2)$ [g]$\} \times 100$. The amount of the additive component can be determined from $\{(Al_2O_3)$ [g] / $(Fe_2O_3 + Tb_4O_7 + Y_2O_3 + ZrO_2 + Al_2O_3 + TiO_2)$ [g]$\} \times 100$. When the chemical composition of the zirconia composition is computed, hafnia ($HfO_2$), which is an unavoidable impurity, can be regarded as zirconia ($ZrO_2$).

The term "BET specific surface area" refers to a value obtained by a single point BET method using nitrogen ($N_2$) as an adsorbate according to JIS Z 8830.

The term "measured density" is defined as follows. The measured density of a green body or a calcined body is the ratio (g/cm$^3$) of the volume measured by dimensional measurement to the mass measured by mass measurement. The measured density of a sintered body is the ratio (g/cm$^3$) of the volume measured by the Archimedes' principle to the mass measured by mass measurement.

The term "XRD pattern" refers to a powder X ray diffraction pattern of colored zirconia measured under the following conditions.

Radiation source          : CuKα line (λ = 0.15418 nm)
Measurement mode     : Continuous scanning
Scanning speed           : 4°/minute

(continued)

| | |
|---|---|
| Measurement range | : 2θ = 26° to 33° |
| Acceleration voltage-current | : 40 mA-40 kV |
| Vertical divergence limiting slit | : 10 mm |
| Divergence/incident slit | : 1° |
| Receiving slit | : Open |
| Detector | : Semiconductor detector (D/teX Ultra) |
| Filter | : Ni filter |
| Radius of goniometer | : 185 mm |

The XRD measurement may be performed using a general X ray diffraction device (for example, Ultima IV manufactured by RIGAKU). The integrated intensities of crystal planes can be determined by subjecting the XRD pattern to smoothing processing and background elimination processing and then subjecting the resulting XRD pattern to profile-fitting using a split pseudo-Voigt function. The analysis of the XRD pattern such as the smoothing processing, the background elimination processing and the computation of the integrated intensities may be performed using analysis programs (such as integrated X-ray powder diffraction software PDXL Ver. 2.2 manufactured by RIGAKU) included with the X ray diffraction device.

Examples of the XRD peak corresponding to a crystal plane of zirconia measured by the XRD measurement described above include XRD peaks each having the peak top at 2θ shown below.

| | |
|---|---|
| XRD peak corresponding to monoclinic (111) plane | : 2θ = 31±0.5° |
| XRD peak corresponding to monoclinic (11-1) plane | : 2θ = 28±0.5° |
| XRD peak corresponding to tetragonal (111) plane | : 2θ = 30±0.5° |
| XRD peak corresponding to cubic (111) plane | : 2θ = 30±0.5° |

The XRD peak corresponding to the tetragonal (111) plane and the XRD peak corresponding to the cubic (111) plane are measured as one overlapping peak.

The term "color tone" refers to a color tone represented by lightness $L^*$ and hues $a^*$ and $b^*$ in the CIE $L^*a^*b^*$ color system (the CIE 1976 ($L^*a^*b^*$) color space). The color tone is measured on a measurement sample having a sample thickness of 1 mm and a surface roughness (Ra) ≤ 0.02 μm in black background measurement under the following conditions using a spectrocolorimeter (such as CM-700d manufactured by KONICA MINOLTA, INC.) equipped with a lighting unit and a receiving optical system according to JIS Z 8722 geometrical conditions c.

| | |
|---|---|
| Light source | : D65 light source |
| Viewing angle | : 10° |
| Measurement mode | : SCI |
| Measurement background | : Black plate |

The term "chroma" refers to an indicator indicating the vividness of the color tone. The chroma is a value determined by the following formula using the hues $a^*$ and $b^*$.

$$C^* = (a^{*2} + b^{*2})^{0.5}$$

In the above formula, $C^*$ is the chroma, and $a^*$ and $b^*$ are the hues $a^*$ and $b^*$, respectively.

The term "color difference" refers to the difference between the color tone of colored zirconia used as a reference and the color tone of target colored zirconia. The color difference is a value determined from the following formula.

$$\Delta E^* = \{(L1^* - L2^*)^2 + (a1^* - a2^*)^2 + (b1^* - b2^*)^2\}^{0.5}$$

In the above formula, $\Delta E^*$ is the color difference. $L1^*$, $a1^*$ and $b1^*$ are the lightness $L^*$ and hues $a^*$ and $b^*$ of the colored zirconia used as the reference. $L2^*$, $a2^*$ and $b2^*$ are the lightness $L^*$ and hues $a^*$ and $b^*$ of the target colored zirconia.

The term "total light transmittance" refers to the following ratio. A measurement sample having a sample thickness of 1 mm and a surface roughness (Ra) $\leq 0.02$ $\mu$m is used, and light from a CIE standard light source D65 used as incident light is caused to pass through the measurement sample. The transmittance (the sum of diffuse transmittance and in-line transmittance) of the transmission light collected by an integrating sphere with respect to the incident light is measured using a general turbidimeter (a haze meter such as NDH4000 manufactured by NIPPON DENSHOKU).

The term "transmittance difference" refers to the ratio of the difference between the total light transmittance of the target colored zirconia and the total light transmittance of the colored zirconia used as the reference. The transmittance difference is a value computed from the following formula.

$$\Delta T = \{(T1 - T2)^2\}^{0.5}$$

In the above formula, $\Delta T$ is the transmittance difference. T1 is the total light transmittance of the colored zirconia used as the reference, and T2 is the total light transmittance of the target colored zirconia.

The term "atmospheric pressure sintering" refers to a sintering method in which no external force is applied to an object to be sintered (such as a green body or a calcined body) during the sintering and specifically to a sintering method at atmospheric pressure.

The term "pressure sintering" refers to a sintering method such as hot-pressing treatment (HP treatment) or hot isostatic pressing treatment (HIP treatment) in which an external force is applied to an object to be sintered during the sintering.

The present embodiment is a method for manufacturing a sintered body, the method including the step of subjecting a sintered body of zirconia containing a coloring element to heat treatment at 600°C or higher and 1200°C or lower (this step is hereinafter referred to also as a "heat treatment step") (in the present embodiment, the sintered body of zirconia containing the coloring element that is to be subjected to the heat treatment step is hereinafter referred to also as a "precursor sintered body" for the sake of convenience). Zirconia containing a coloring element (colored zirconia) is held at a sintering temperature to densify the zirconia and to obtain a desired color tone in conventional sintering. However, in the present embodiment, attention is given to the fact that, with short-time sintering, the degree of densification of the colored zirconia can be the same as that of colored zirconia obtained by long-time sintering but the change in the color tone of the colored zirconia differs from that of the colored zirconia obtained by the long-time sintering. Moreover, in the present embodiment, the sintered colored zirconia is subjected to heat treatment that does not cause densification. This allows the coloration of the colored zirconia to be further facilitated, and it has been found that the sintered body obtained has an aesthetic appearance visually equivalent to that of a colored zirconia sintered body obtained by long-time sintering.

Known examples of the sintering atmosphere for zirconia mainly include an oxidizing atmosphere, a reducing atmosphere and a vacuum atmosphere. It is known in the conventional art that, when zirconia is sintered, a sintered body sintered in a reducing atmosphere is subjected to heat treatment in an oxidizing atmosphere (so-called annealing) for the purpose of removing residual carbon and reduced materials such as metal elements in a reduced state. In the annealing, sintering is performed in an atmosphere different from at least any of the sintering atmosphere for a green body and the sintering atmosphere for a calcined body. However, the heat treatment in the present embodiment has an effect different from that of the annealing and is preferably heat treatment in the same atmosphere as the sintering atmosphere and more preferably heat treatment in an atmospheric atmosphere that is performed on a colored zirconia sintered body sintered in an atmospheric atmosphere. By performing the above heat treatment, the coloration of the colored zirconia may be further facilitated.

<Colored zirconia sintered body>

The sintered body of zirconia containing the coloring element (the colored zirconia sintered body; the precursor sintered body) is subjected to the heat treatment step. The precursor sintered body is preferably a sintered body in the state of being sintered in an oxidizing atmosphere and also preferably a sintered body in the state of being sintered by atmospheric pressure sintering, i.e., a so-called atmospheric sintered body. Moreover, the precursor sintered body is preferably a sintered body in the state of being sintered by atmospheric pressure sintering in an atmospheric atmosphere (an atmospheric sintered body in the state of being sintered in an atmospheric atmosphere), is preferably a sintered body in the state of being sintered by atmospheric pressure sintering in an atmospheric atmosphere at a sintering temperature for a holding time of 2 hours or shorter and is preferably a sintered body in the state of being sintered by atmospheric pressure sintering in an atmospheric atmosphere at the sintering temperature for a holding time of shorter than 2 hours.

Preferably, the precursor sintered body has no porcelain material on its surface.

The following features of a colored zirconia sintered body may be common to the colored zirconia sintered body (precursor sintered body) to be subjected to the heat treatment step in the manufacturing method in the present embodiment and the sintered body obtained through the heat treatment step (a colored zirconia sintered body, which may be hereinafter referred to also as a "heat-treated sintered body" for the sake of convenience).

The coloring element may be at least any of transition metal elements and lanthanide rare earth elements or may be a transition metal element other than zirconium (Zr) and hafnium (Hf) or a lanthanide rare earth element. A preferred coloring element is, for example, at least one selected from the group consisting of iron (Fe), cobalt (Co), manganese (Mn), nickel (Ni), copper (Cu), titanium (Ti), chromium (Cr), cerium (Ce), praseodymium (Pr), neodymium (Nd), erbium (Er), terbium (Tb) and ytterbium (Yb), at least one selected from the group consisting of iron, cobalt, titanium, manganese, praseodymium, erbium and terbium or at least one selected from the group consisting of iron, cobalt, titanium, erbium and terbium. The coloring element includes preferably at least iron or terbium and includes more preferably at least terbium.

The coloring element contained in the colored zirconia can be in any form. The coloring element may be contained as at least any of ions and a compound. The coloring element may be contained in zirconia as a solute to form a solid solution.

It is preferable that the colored zirconia contains, as coloring elements, at least one selected from the group consisting of iron, terbium and praseodymium (which are hereinafter referred to also as "yellow coloring elements") and at least any of neodymium and erbium (which are hereinafter referred to also as "red coloring elements"). It is more preferable that the colored zirconia contains, as coloring elements, a yellow coloring element, a red coloring element and at least one selected from the group consisting of cobalt, titanium and manganese (which are hereinafter referred to as "gray coloring elements"). When any combination of these coloring elements are contained as coloring elements, the colored zirconia is more likely to provide a visual impression close to that of natural teeth.

The colored zirconia may contain, as coloring elements, a yellow coloring element and a gray coloring element or may contain a gray coloring element and a red coloring element.

Preferably, the zirconia contains a stabilizing element. Preferably, the stabilizing element is at least one selected from the group consisting of yttrium (Y), calcium (Ca), cerium, magnesium (Mg), praseodymium, ytterbium, erbium and terbium, is at least one selected from the group consisting of yttrium, cerium, erbium and terbium, is at one selected from the group consisting of yttrium, erbium and terbium, is at one selected from the group consisting of yttrium and terbium or is yttrium. Preferably, the stabilizing element includes at least yttrium.

The zirconia contains preferably a stabilizing element, contains more preferably at least one selected from the group consisting of yttrium, calcium, cerium, magnesium, praseodymium, ytterbium, erbium and terbium, contains still more preferably at least one selected from the group consisting of yttrium, erbium and terbium, contains yet more preferably at least any of yttrium and terbium and contains particularly preferably at least yttrium.

At least one selected from the group consisting of cerium, praseodymium, ytterbium, terbium and erbium, at least any of terbium and erbium, and terbium are each a stabilizing element (coloring-stabilizing element) that functions also as a coloring element. The colored zirconia may contain only a coloring-stabilizing element as the coloring element or may contain a coloring element other than the above coloring-stabilizing elements. To allow the colored zirconia sintered body obtained through the heat treatment step to have a desired color tone and to stabilize the crystal phase of the zirconia, the colored zirconia may contain a coloring-stabilizing element and a stabilizing element that does not function as a coloring element (this stabilizing element is hereinafter referred to also as a "non-coloring stabilizing element"). The non-coloring stabilizing element is, for example, at least one selected from the group consisting of yttrium, calcium and magnesium and is, for example, yttrium.

In the colored zirconia, the content of the stabilizing element in the zirconia may be such an amount that the crystal phase of the zirconia is stabilized and is 0.1 mol% or more and 10 mol% or less. When the stabilizing element is yttrium, the content of the stabilizing element (which may be referred to also as the "amount of yttrium" etc. when the stabilizing element is yttrium etc.) is 2.5 mol% or more, 3 mol% or more and, 3.5 mol% or more and, 4 mol% or more or 5 mol% or more and is 8 mol% or less, 7 mol% or less, 6 mol% or less or 5.5 mol% or less. Similarly, the amount of erbium is 0 mol% or more, 0.03 mol% or more or 0.1 mol% or more and is 0.62 mol% or less or 0.41 mol% or less. The amount of terbium is 0 mol% or more, 0.001 mol% or more or 0.002 mol% or more and is 0.04 mol% or less, 0.02 mol% or less or 0.01 mol% or less.

If necessary, the colored zirconia sintered body may contain a component having a function other than the coloring and stabilizing functions (this component is hereinafter referred to as an "additive component"). Examples of the additive component include alumina ($Al_2O_3$).

The colored zirconia sintered body may contain alumina because the sintered body tends to be less susceptible to degradation. The content of alumina in the sintered body (the amount of the additive component when the additive component is alumina etc. is hereinafter referred to also as the "amount of alumina" etc.) is 0 mass% or more, more than 0 mass%, 0.01 mass% or more or 0.02 mass% or more and is 0.1 mass% or less or 0.06 mass% or less. The colored zirconia sintered body may not contain alumina (i.e., the content of alumina may be 0 mass%).

The colored zirconia sintered body may contain unavoidable impurities. Examples of the unavoidable impurities

include hafnia ($HfO_2$) that is an unavoidable impurity in zirconia.

It is preferable that the colored zirconia sintered body does not contain an oxide of a stabilizing element, i.e., an undissolved stabilizing element, and it is more preferable that the colored zirconia sintered body does not contain undissolved yttria ($Y_2O_3$). Whether the sintered body contains an undissolved stabilizing element can be checked using the XRD pattern of the sintered body. Specifically, when the XRD pattern of the colored zirconia sintered body includes an XRD peak of an oxide of a stabilizing element (such as yttria: $Y_2O_3$), the sintered body can be considered to contain the undissolved stabilizing element. In the present embodiment, the colored zirconia sintered body is allowed to contain an undissolved stabilizing element in an amount that cannot be checked from the XRD pattern because the characteristics of the colored zirconia sintered body are not substantially affected.

The colored zirconia sintered body may have any shape so long as the shape is suitable for its intended purpose or application. Examples of the shape of the colored zirconia sintered body include disk shapes, cylindrical shapes, polyhedral shapes, spherical shapes and conical shapes.

<Sintering step>

The colored zirconia sintered body (precursor sintered body) to be subjected to the heat treatment step may be a sintered body obtained by any manufacturing method. The precursor sintered body is preferably a sintered body obtained by sintering colored zirconia in an oxidizing atmosphere, more preferably a sintered body obtained by subjecting colored zirconia to atmospheric pressure sintering, still more preferably a sintered body obtained by subjecting colored zirconia to atmospheric pressure sintering in an atmospheric atmosphere and yet more preferably a sintered body of zirconia containing the coloring element that is obtained by holding colored zirconia at a sintering temperature of 1400°C or higher for shorter than 2 hours to sinter the colored zirconia.

In other words, the manufacturing method in the present embodiment may include, before the heat treatment step, the step of sintering the zirconia containing the coloring element (the colored zirconia) (this step is referred to also as a "sintering step"), the step of sintering the colored zirconia in an oxidizing atmosphere to obtain a colored zirconia sintered body or the step of subjecting the colored zirconia to atmospheric pressure sintering to obtain a colored zirconia sintered body or may include, before the heat treatment step, the step of subjecting the colored zirconia to atmospheric pressure sintering in an atmospheric atmosphere to obtain a colored zirconia sintered body or the step of holding the colored zirconia at a sintering temperature of 1400°C of higher for shorter than 2 hours to sinter the colored zirconia to thereby obtain a sintered body of zirconia containing the coloring element.

As the sintering temperature increases, the densification of the colored zirconia tends to be facilitated. It is only necessary that the sintering temperature be a temperature at which the densification of the colored zirconia proceeds. The sintering temperature is preferably 1400°C or higher, 1450°C or higher, 1500°C or higher or 1550°C or higher. There is no need to set the sintering temperature higher than necessary, so long as the densification of the colored zirconia is facilitated, and the sintering temperature is, for example, 1650°C or lower or 1600°C or lower.

The colored zirconia is held at the sintering temperature for preferably shorter than 2 hours, shorter than 1 hour, 30 minutes or shorter or 20 minutes or shorter and for preferably 1 minute or longer, 5 minutes or longer or 10 minutes or longer.

The sintering atmosphere is preferably an oxidizing atmosphere and more preferably an atmospheric atmosphere.

Any sintering method may be used. The sintering method is at least one selected from the group consisting of vacuum sintering, pressure sintering and atmospheric pressure sintering. The sintering method is preferably at least any of pressure sintering and atmospheric pressure sintering, more preferably atmospheric pressure sintering and still more preferably only atmospheric pressure sintering. It is preferable that the sintering step includes no pressure sintering and no vacuum sintering, and it is more preferable that the sintering step includes no pressure sintering.

The heating rate during heating to the sintering temperature can be arbitrarily selected. From the viewpoint of reducing the time required for the sintering, it is preferable to set the heating rate such that the time required for heating to the sintering temperature (heating time) is 2 hours or shorter. The heating time is preferably 1 hour or shorter, 30 minutes or shorter, 15 minutes or shorter or 10 minutes or shorter. When a general-purpose sintering furnace is used, the heating time is, for example, 3 minutes or longer or 5 minutes or longer. The heating rate to the sintering temperature is, for example, 5°C/minute or more, 10°C/minute or more, 50°C/minute or more, 100°C/minute or more or 150°C/minute or more and is 300°C/minute or less, 200°C/minute or less or 190°C/minute or less. The heating rates in different temperature ranges to the sintering temperature, for example, in the range of from room temperature to around 1000°C, the range of from 1000 to around 1200°C and the range of from 1200°C to the sintering temperature, may differ from each other. The heating rate may differ from a cooling rate described later.

It is only necessary that the colored zirconia to be subjected to the sintering step be a colored zirconia composition that can serve as a precursor of the sintered body (precursor sintered body). In particular, the colored zirconia is at least one selected from the group consisting of powders of colored zirconia, granular powders of colored zirconia, colored zirconia green bodies and colored zirconia calcined bodies or at least any of a colored zirconia green body and a colored zirconia calcined body.

The colored zirconia to be subjected to the sintering step may be a colored zirconia green body because of its convenience. When, for example, the shape of the green body differs from the shape of the intended sintered body, the colored zirconia to be subjected to the sintering step is preferably a colored zirconia calcined body, and the calcined body may be processed into a given shape before the sintering step using processing means such as CAD/CAM. As described above, the calcined body to be subjected to the sintering step may be a pre-processed calcined body.

A method for manufacturing the colored zirconia green body to be subjected to the sintering step can be arbitrarily selected. For example, if necessary, at least any of a colored zirconia powder and a colored zirconia granular powder is mixed with a binder, and the mixture may be molded using a well-known method. The colored zirconia green body is preferably a green body containing a powder mixture of a powder containing a coloring element and a zirconia powder and more preferably a green body formed by molding the powder mixture of the powder containing the coloring element and the zirconia powder.

The molding method is, for example, at least one selected from the group consisting of uniaxial pressing, cold isostatic pressing, slip casting and injection molding. The molding method is preferably at least any of uniaxial pressing and cold isostatic pressing because of their convenience and is more preferably a molding method in which uniaxial pressing is performed followed by cold isostatic pressing. The pressure during the uniaxial pressing is, for example, 15 MPa or more and 150 MPa or less, and the pressure during the cold isostatic pressing is, for example, 90 MPa or more and 400 MPa or less. As the pressure during the molding increases, the density of the green body obtained tends to increase.

The zirconia contained in the colored zirconia green body is preferably zirconia in the state of being prepared by subjecting a zirconia sol to heat treatment, more preferably zirconia in the state of being prepared by subjecting a zirconia sol obtained by hydrolysis of a zirconium compound to heat treatment and still more preferably zirconia in the state of being prepared by subjecting a zirconia sol obtained by hydrolysis of zirconium oxychloride to heat treatment.

The binder is a material having the function of enhancing the physical bonding between powder particles and between granular powder particles and may be any binder that is used for molding of ceramics and can improve the shape retainability of the green body. Preferably, the binder is removed from the colored zirconia through heat treatment at 1200°C or lower and is, for example, an organic binder, at least one selected from the group consisting of polyvinyl alcohols, polyvinyl butyrates, waxes, and acrylic resins, at least any of a polyvinyl alcohol and an acrylic resin or an acrylic resin.

Preferably, the binder contained in the green body is removed before sintering. Any method may be used to remove the binder. Examples of the removal method include firing in an atmospheric atmosphere at 400°C or higher and lower than 900°C.

The colored zirconia to be subjected to the sintering step may be a colored zirconia calcined body. Any method may be used to manufacture the colored zirconia calcined body to be subjected to the sintering step, and the colored zirconia green body may be, for example, calcined using a well-known method.

The calcination may be any heat treatment under the conditions under which the particles of the colored zirconia powder become fused particles. Examples of the heat treatment include heat treatment at a temperature lower than the sintering temperature of zirconia.

The calcination temperature is, for example, 800°C or higher, 900°C or higher or 950°C or higher and is, for example, 1200°C or lower, 1150°C or lower or 1100°C or lower.

The holding time at the calcination temperature is preferably 0.5 hours or longer and 5 hours or shorter and more preferably 0.5 hours or longer and 3 hours or shorter.

The calcination atmosphere is preferably an atmosphere other than a reducing atmosphere and more preferably an oxidizing atmosphere or an atmospheric atmosphere. The calcination atmosphere may be the same as the atmosphere in the sintering step and the atmosphere in the heat treatment step and may differ from theses atmospheres.

<Heat treatment step>

In the manufacturing method in the present embodiment, the colored zirconia sintered body (precursor sintered body) is subjected to heat treatment at 600°C or higher and 1200°C or lower. The heat treatment is performed preferably at 700°C or higher, 750°C or higher, 800°C or higher or 850°C or higher and 1150°C or lower, 1100°C or lower or 1050°C or lower because the coloration of the zirconia tends to be facilitated and is performed more preferably at higher than 700°C and lower than 1100°C.

When the coloring element is a transition metal element, it is preferable to perform the heat treatment at 700°C or higher or 800°C or higher and 1200°C or lower or 1150°C or lower. The heat treatment of a precursor sintered body containing iron is performed, for example, at 800°C or higher or 900°C or higher and 1200°C or lower or 1150°C or lower. The heat treatment of a precursor sintered body containing cobalt is performed, for example, at 700°C or higher or 800°C or higher and 1150°C or lower or 1100°C or lower. The heat treatment of a precursor sintered body containing manganese is performed, for example, at 900°C or higher or 1000°C or higher and 1200°C or lower or 1150°C or lower.

When the coloring element is a lanthanide rare earth element, the heat treatment is performed preferably at 650°C or higher or 700°C or higher and 1200°C or lower or 1100°C or lower. The heat treatment of a precursor sintered body containing terbium is performed, for example, at 650°C or higher or 700°C or higher and 1150°C or lower or 1100°C or lower. The heat treatment of a precursor sintered body containing praseodymium is performed, for example, at 800°C or higher or 900°C or higher and 1200°C or lower or 1100°C or lower.

The heat treatment is preferably heat treatment in which the precursor sintered body is held at a heat treatment temperature of 600°C or higher and 1200°C or lower (which is hereinafter referred to simply as the "heat treatment temperature"). The heat treatment temperature may be a constant temperature or may vary within a certain temperature range. The temperature range of the heat treatment temperature is, for example, ±0°C, ±2°C, ±5°C, ±10°C, ±30°C or ±50°C. The heat treatment is, for example, heat treatment in which the precursor sintered body is held at at least one heat treatment temperature selected from the group consisting of 1150°C, 1100°C, 1050°C, 1000°C, 950°C, 900°C, 850°C, 800°C, 750°C, 700°C, 650°C and 600°C and the range of the heat treatment temperature is ±50°C or less, ±30°C or less or ±5°C or less, heat treatment in which the precursor sintered body is held at at least one heat treatment temperature selected from the group consisting of 1000°C, 900°C, 800°C and 700°C and the range of the heat treatment temperature is ±50°C or less, ±30°C or less, ±10°C or less or ±5°C or less, or heat treatment in which the precursor sintered body is held at at least one heat treatment temperature selected from the group consisting of 1000°C, 900°C or 800°C and the range of the heat treatment temperature is ±30°C or less, ±10°C or less or ±5°C or less.

The heat treatment may be heat treatment in which the precursor sintered body is held at two or more heat treatment temperatures. Examples of the heat treatment in which the precursor sintered body is held at two or more heat treatment temperatures include: heat treatment in which the precursor sintered body is held at a heat treatment temperature of 1000°C or higher and 1200°C or lower and then held at a heat treatment temperature of 600°C or higher and lower than 1000°C; and heat treatment in which the precursor sintered body is held at a heat treatment temperature of 600°C or higher and lower than 1000°C and then held at a heat treatment temperature of 1000°C or higher and 1200°C or lower.

The heat treatment time can be arbitrarily selected. The heat treatment time may be the same as the holding time at the heat treatment temperature. The holding time at the heat treatment temperature is, for example, 1 minute or longer, 3 minutes or longer, 5 minutes or longer or 10 minutes or longer. From the viewpoint of reducing the time required for sintering, the holding time is preferably 2 hours or shorter, 1 hour or shorter, 30 minutes or shorter, 25 minutes or shorter or 20 minutes or shorter.

The atmosphere of the heat treatment is preferably an oxidizing atmosphere and more preferably an atmospheric atmosphere.

Any method may be used for the heat treatment, and the heat treatment method is at least one selected from the group consisting of sintering in a vacuum, firing under increased pressure and firing at normal pressure and is preferably at least any of firing under increased pressure and firing at normal pressure, more preferably firing at normal pressure and still more preferably only firing at normal pressure. The firing at normal pressure is particularly preferably firing in an atmospheric atmosphere at normal pressure.

In the heat treatment step, it is preferable to perform the heat treatment using a sintering program that controls the sintering such that the above-described heat treatment temperature and the above-described holding time are obtained.

In one preferred example of the heat treatment step, the colored zirconia sintered body is placed in a firing furnace heated to the heat treatment temperature and subjected to the heat treatment. In this case, a colored zirconia sintered body having the desired color tone can be obtained in a shorter time. To produce the sintered body in a shorter time, it is preferable that the heat treatment step includes cooling the sintered body of zirconia containing the coloring element that has been held at the sintering temperature from the sintering temperature to a temperature of 1000°C or higher and 1200°C or lower, removing the cooled sintered body from the sintering furnace and then placing the removed sintered body in a firing furnace at 600°C or higher and 1200°C or lower to perform heat treatment.

Another preferred example of the heat treatment step is the step of cooling the colored zirconia sintered body held at the sintering temperature to the heat treatment temperature and holding the cooled sintered body at the heat treatment temperature to perform heat treatment. In this manner, a colored zirconia sintered body having the desired color tone can be obtained without using a plurality of sintering furnaces.

A cooling process in a conventional sintering method is a step performed for the purpose of cooling the sintered zirconia to a removal temperature (for example, a temperature around room temperature). Therefore, from the viewpoint of reducing the time required for the sintering, it has been considered preferable to shorten the cooling process. However, in the heat treatment step, the time required for the cooling process is increased to perform the heat treatment during the cooling. In this manner, the colored zirconia sintered body can be cooled while the color tone of the sintered colored zirconia is controlled. Therefore, the time and energy required for the heat treatment are smaller than those required when a sintered body cooled to near room temperature is again subjected to heat treatment, and the manufacturing method in the present embodiment is an industrially more suitable manufacturing method.

In the present embodiment, it is preferable to retain the sintered body in a temperature region of 600°C or higher and 1200°C or lower for 5 minutes or longer in the cooling process. It is considered that, when these conditions are met, the state of the coloring element contained in the sintered body approaches the state of the coloring element contained in the sintered body obtained through long-time sintering, and the sintered body obtained can easily have the desired color tone.

In the cooling process, the holding time of the precursor sintered body retained in the temperature region of 600°C or higher and 1200°C or lower (this time is hereinafter referred to also as "retention time") is, for example, 5 minutes or longer, 8 minutes or longer or 10 minutes or longer and is 90 minutes or shorter, 80 minutes or shorter, 70 minutes or shorter or 60 minutes or shorter. From the viewpoint of bringing the color tone of the sintered body closer to the color tone of the sintered body obtained through long-time sintering, a longer retention time is preferred. However, to reduce the total time required for the sintering step and the heat treatment step, the retention time is preferably 50 minutes or shorter or 40 minutes or shorter.

In the cooling process, the temperature region in which the precursor sintered body is retained (this temperature region is hereinafter referred to also as a "retention temperature region") is, for example, 600°C or higher and 1200°C or lower, 700°C or higher and 1150°C or lower and 700°C or higher and 1100°C or lower. When the coloring element is a transition metal element, the retention temperature region is preferably 700°C or higher and 1200°C or lower. For example, the retention temperature region when the precursor sintered body contains iron is preferably 800°C or higher and 1200°C or lower, and the retention temperature region when the precursor sintered body contains cobalt is preferably 700°C or higher and 1150°C or lower. The retention temperature region when the precursor sintered body contains manganese is 900°C or higher and 1200°C or lower. The retention temperature region when the precursor sintered body contains a lanthanide rare earth element is preferably 650°C or higher and 1200°C or lower. The retention temperature region when the precursor sintered body contains terbium is, for example, 650°C or higher and 1150°C or lower. The retention temperature region when the precursor sintered body contains praseodymium is, for example, 800°C or higher and 1200°C or lower.

In the present embodiment, the cooling rate in the temperature region from 1200°C to the heat treatment temperature in the cooling process (this cooling rate is hereinafter referred to also as the "cooling rate from 1200°C to the heat treatment temperature") is 10°C/minute or more, 15°C/minute or more or 20°C/minute or more and is 100°C/minute or less, 80°C/minute or less or 60°C/minute or less.

When the precursor sintered body held at the sintering temperature is cooled to the heat treatment temperature and held at the heat treatment temperature to perform heat treatment, the holding time at the heat treatment temperature can be arbitrarily selected. However, the holding time is, for example, 1 minute or longer, 4 minutes or longer, 8 minutes or longer or 10 minutes or longer and is, for example, 1 hour or shorter, 50 minutes or shorter, 40 minutes or shorter or 30 minutes or shorter. When the retention time in the cooling process is long, the coloration of the colored zirconia tends to be desirably facilitated even when the holding time at the heat treatment temperature is short. For example, when a sintered body obtained by cooling its precursor sintered body in a temperature region of 600°C or higher and 1200°C or lower over 30 minutes and then subjecting the precursor sintered body to heat treatment at 600°C for 5 minutes is compared with a sintered body obtained by cooling its precursor sintered body in a temperature region of 1000°C or higher and 1200°C or lower over 5 minutes and then subjecting the precursor sintered body to heat treatment at 1000°C for 10 minutes, the color differences between the sintered body obtained through long-time sintering and these sintered bodies are equivalent to each other.

When the precursor sintered body held at the sintering temperature is cooled to the heat treatment temperature and held at the heat treatment temperature to perform heat treatment, the heat treatment may be heat treatment in which the precursor sintered body is held at two or more heat treatment temperatures. The heat treatment in which the precursor sintered body is held at two or more heat treatment temperatures is, for example, heat treatment in which the precursor sintered body is held at a heat treatment temperature of 1000°C or higher and 1200°C or lower and then held at a heat treatment temperature of 600°C or higher and lower than 1000°C.

After the heat treatment step, the colored zirconia sintered body (heat-treated sintered body) may be removed from the sintering furnace or the firing furnace using a method that does not cause defects to be formed in the sintered body. Any method may be used for the cooling after the heat treatment, and examples of the cooling method include: a method in which the temperature is reduced to near room temperature (e.g., 20 to 30°C) in the sintering furnace while the cooling rate is controlled; a method in which the temperature is reduced to near room temperature in the sintering furnace by natural cooling; and a method in which the colored zirconia (heat-treated sintered body) is removed from the firing furnace maintained at the heat treatment temperature and cooled at room temperature.

The total time required for the sintering step and the heat treatment step is preferably shorter than that for long-time sintering, is preferably 5 hours or shorter, 3 hours or shorter, 1 hour or shorter or 45 minutes or shorter and is 10 minutes or longer, 15 minutes or longer or 30 minutes or longer.

The heat-treated sintered body is a colored zirconia sintered body formed of the same constituent elements as those of the precursor sintered body and is a colored zirconia sintered body having a higher chroma than the colored zirconia sintered body (precursor sintered body) to be subjected to the heat treatment step. The lightness L* of the precursor sintered body and the lightness L* of the sintered body obtained through long-time sintering (which is hereinafter referred to also as a "long-time sintered body") are close to each other (for example, the difference in lightness L* is within ±5). However, the chroma C* of the precursor sintered body and the chroma C* of the long-time sintered body largely differ from each other. Therefore, the color difference ∆E* is large, and these color tones may be visually recognized as different color tones. For some types of coloring elements, the chroma C* of the precursor sintered body and the chroma C* of the long-time sintered body can be similar to each other, but the lightness L* of the precursor sintered body and the lightness L* of the long-time sintered body can largely differ from each other. In this case, the color difference ∆E* is large, and these color tones may be visually recognized as different color tones.

Accordingly, in the manufacturing method in the present embodiment, the chroma of the heat-treated sintered body is preferably higher by 0.3 or more, 0.6 or more or 0.8 or more than that of the precursor sintered body. It is also preferable that the heat-treated sintered body is at least any of a colored zirconia sintered body in which the difference in lightness (L*) between the colored zirconia sintered body and the precursor sintered body is 5 or less and the chroma (C*) of the colored zirconia sintered body is higher by 0.3 or more, 0.6 or more or 0.8 or more than that of the precursor sintered body and a colored zirconia sintered body in which the difference in lightness (L*) is more than 5 and the difference in the chroma (C*) is 10 or less. It is more preferable that the heat-treated sintered body is a colored zirconia sintered body in which the difference in lightness L* is 5 or less and the chroma C* is higher by 0.3 or more, 0.6 or more or 0.8 or more. It is preferable that the chroma C* of the heat-treated sintered body is higher by 0.3 or more, 0.6 or more, 0.8 or more, 1.0 or more, 1.5 or more or 2.0 or more than that of the precursor sintered body and that the lightness L* of the heat-treated sintered body is 5 or less, 4.5 or less or 4 or less. In this case, the color tone of the heat-treated sintered body can be visually recognized as equivalent to the color tone of the long-time sintered body. The difference in chroma is 8.0 or less, 5.0 or less or 4.5 or less. In other words, the manufacturing method in the present embodiment can be regarded as a sintered body manufacturing method including the step of subjecting the sintered body of zirconia containing the coloring element to heat treatment at 600°C or higher and 1200°C or lower, wherein the chroma of the sintered body subjected to the heat treatment is higher by 0.6 or more or 0.8 or more than the chroma of the sintered body before the heat treatment.

The heat-treated sintered body is a sintered body having a color tone visually equivalent to the color tone of the sintered body obtained through long-time sintering. For example, when the chemical composition of the colored zirconia used to obtain the heat-treated sintered body (the sintered body obtained by the manufacturing method in the present embodiment) is the same as the chemical composition of the colored zirconia that is subjected to long-time sintering under the following conditions to obtain the long-time sintered body, the color difference (∆E*) that is the difference in color tone between the heat-treated sintered body and the long-time sintered body is, for example, 5 or less, 3 or less or 2 or less and is, for example, 0 or more or 0.5 or more.

| | |
|---|---|
| Heating rate | : 600°C/hour |
| Sintering temperature | : 1500°C |
| Holding time | : 2 hours |
| Cooling rate | : 500°C/hour |

Similarly, the difference in light transmittance (∆T) between the heat-treated sintered body and the long-time sintered body is, for example, 0.15 or less or 0.10 or less and is, for example, 0 or more or 0.01 or more.

<Heat-treated sintered body>

Next, the sintered body obtained by the manufacturing method in the present embodiment (which is hereinafter referred to also as the "sintered body in the present embodiment") will be described. Specifically, a zirconia sintered body containing, as a coloring element, at least one selected from the group consisting of terbium, iron and praseodymium will be described as an example.

The sintered body in the present embodiment is a yellow zirconia sintered body having a yellow color tone. The color tone of the sintered body in the present embodiment means, for example, that the lightness L* and chromas a* and b* in the L*a*b* color system are the following values.

| | |
|---|---|
| Lightness L* | 66 or more or 70 or more and |
| | 80 or less or 75 or less |

(continued)

| | |
|---|---|
| Hue a* | 0.1 or more, 0.2 or more or 0.3 or more and |
| | 2.0 or less, 1.8 or less, 1.0 or less or 0.8 or less |
| Hue b* | 10 or more, 12 or more, 20 or more or 24 or more and |
| | 30 or less or 28 or less |

Preferably, the sintered body in the present embodiment can transmit light. The sintered body in the present embodiment has a total light transmittance (the total light transmittance of light from a D65 light source through a sample having a thickness of 1 mm) of, for example, 25% or more, 30% or more, 35% or more or 36% or more and 41% or less or 40% or less.

The sintered body in the present embodiment contains preferably zirconia whose crystal phase is at least one of a tetragonal phase (T phase) and a cubic phase (C phase), contains more presently zirconia including a tetragonal phase as its main phase and contains still more preferably zirconia including a tetragonal phase as a main phase and zirconia including a cubic phase as a main phase. The term "main phase" in the present embodiment means a crystal phase whose ratio is the highest among the crystal phases of zirconia (the ratio of the integrated intensity of its XRD peak is the highest). The above ratio can be determined from an XRD pattern from the surface of the sintered body.

When the sintered body in the present embodiment is a zirconia sintered body containing, as coloring elements, a yellow coloring element and a red coloring element or a zirconia sintered body containing, as coloring elements, a yellow coloring element, a red coloring element and a gray coloring element, the sintered body in the present embodiment has preferably the same color tone as that of a dental color tone sample and has more preferably a color tone of A1, A2, A3, A3.5, A4, B1, B2, B3, B4, C1, C2, C3, C4, D2, D3 or D4 in the Vita classical shade guide.

Representative color tones in the present embodiment include color tones in the L*a*b* color system shown in Table 1. However, the color tone of a sintered body depends on its light transmittance. Therefore, the color tone values of sintered bodies in the same color tone class may differ from each other.

[Table 1]

| Color tone class | L* | a* | b* | Color tone class | L* | a* | b* |
|---|---|---|---|---|---|---|---|
| A1 | 77.0~79.5 | -1.5~1.2 | 3.0~7.4 | C1 | 73.7~76.9 | -1.5~3.0 | 3.0~7.1 |
| A2 | 74.4~76.8 | -1.2~2.4 | 5.0~9.9 | C2 | 73.3~73.9 | -3.0~4.0 | 7.2~11.9 |
| A3 | 74.0~74.9 | -2.0~2.0 | 11.0~14.7 | C3 | 71.0~73.2 | -3.0~4.0 | 9.7~13.4 |
| A3.5 | 71.7~73.2 | -1.0~0.7 | 13.5~16.0 | C4 | 66.0~70.0 | 0~1.9 | 10.0~14.5 |
| A4 | 69.3~70.9 | 2.0~4.0 | 12.1~15.5 | D2 | 71.7~73.2 | -2.0~5.0 | 7.5~9.6 |
| B1 | 75.4~79.4 | -4.0~-1.6 | 5.5~8.0 | D3 | 73.3~73.9 | 0.8~5.0 | 12.5~19.0 |
| B2 | 76.9~78.6 | -3.0~0.7 | 8.1~15.4 | D4 | 73.3~73.9 | -3.0~0.7 | 12.0~16.9 |
| B3 | 75.0~76.8 | -3.0~2.0 | 10.0~14.9 | | | | |
| B4 | 74.0~74.9 | -3.0~6.0 | 14.8~20.0 | | | | |

The method for manufacturing a sintered body in the present embodiment can be used as a method for manufacturing a sintered body used in well-known zirconia applications such as structural materials and optical materials. Specifically, the method can be used as a method for manufacturing a sintered body used for exterior and decorative members of portable electronic devices and dental materials including dental prostheses such as crowns, bridges, inlays, onlays and veneers, dental implant materials such as abutments and implant bridges and orthodontic materials such as brackets, can be used particularly as a method for manufacturing a dental sintered body and a method for manufacturing a sintered body for a dental prosthesis and can be used also as a method for adjusting the color tone of a sintered body for a dental prosthesis.

EXAMPLES

The embodiment will next be described in more detail by way of Examples. However, the present embodiment is not limited to the Examples.

(BET specific surface area)

The BET specific surface area of a specimen was measured using a general BET specific surface area measurement apparatus (apparatus name; TriStar II 3020 manufactured by Shimadzu Corporation) and nitrogen gas as an adsorbate gas by a single point BET method according to JIS Z 8830. The specimen was subjected to degassing treatment as pre-treatment in air at 250°C for 30 minutes.

(Average granule size)

The average granule size of a granular powder specimen was measured by charging a Microtrac particle size distribution meter (apparatus name: MT3100II manufactured by MicrotracBEL) with the granular powder specimen. The particle size at a cumulative volume of 50% was used as the average granule size.

(Total light transmittance)

The total light transmittance of a specimen was measured by a measurement method according to JIS K 7361. A standard light source D65 was used to irradiate the measurement specimen, and the light bundle passing through the measurement specimen was detected using an integrating sphere to measure the total light transmittance. In the measurement, a general haze meter (apparatus name: Haze meter NDH4000 manufactured by NIPPON DENSHOKU) was used.

The measurement specimen was a disk having a diameter of 20 mm × a thickness of 1 mm, and a sintered body with both surfaces mirror-polished to a surface roughness of Ra ≤ 0.02 μm was used as the measurement specimen.

(Color tone)

A general spectrocolorimeter (apparatus name: CM-700d manufactured by KONICA MINOLTA, INC.) was used to measure the color tone of a measurement specimen placed on a black plate by black background measurement. The measurement conditions are as follows.

Light source     : D65 light source
Viewing angle    : 10°

Measurement mode               : SCI
Effective area for evaluation of color tone    : Diameter 10 mm

The measurement specimen was a disk having a diameter of 20 mm × a thickness of 1 mm, and a sintered body with both surfaces mirror-polished to a surface roughness of Ra ≤ 0.02 μm was used as the measurement specimen.

(Color difference)

The color tones of colored zirconia sintered bodies (heat-treated sintered bodies) obtained in Examples and Comparative Examples and the color tones of colored zirconia sintered bodies (Reference Examples) having the same chemical compositions as those of the above sintered bodies and manufactured by long-time sintering were used to determine color differences from the following formula.

$$\Delta E^* = \{(L1^* - L2^*)^2 + (a1^* - a2^*)^2 + (b1^* - b2^*)^2\}^{0.5}$$

In the above formula, $\Delta E^*$ is the color difference. $L1^*$, $a1^*$ and $b1^*$ are the lightness $L^*$ and hues $a^*$ and $b^*$ of a colored zirconia sintered body in a Reference Example. $L2^*$, $a2^*$ and $b2^*$ are the lightness $L^*$ and hues $a^*$ and $b^*$ of a measurement specimen.

Reference Example 1 (Production of sintered body by long-time sintering)

Terbium- and yttrium-stabilized zirconia with a terbium content of 0.034 mol% and an yttrium content of 4.0 mol%, $\alpha$-alumina and pure water were mixed in a 2.3 L container to obtain a slurry. The slurry was spray-dried at 180°C to thereby obtain an alumina-containing granular powder with an alumina content of 0.05 mass% with the balance being the terbium- and yttrium-stabilized zirconia with a terbium content of 0.034 mol% and an yttrium content of 4.0 mol% (a terbium- and yttrium-stabilized zirconia granular powder containing alumina). The granular powder had a BET specific surface area of 10.2 m$^2$/g and an average granule size of 43 $\mu$m.

A die having an inner diameter of 25 mm was charged with 3 g of the granular powder, and the granular powder was subjected to uniaxial pressing at a pressure of 49 MPa. After the uniaxial pressing, the resulting granular powder was subjected to CIP treatment at a pressure of 196 MPa to thereby obtain a green body (compacted body).

The green body was heated to 1000°C at a heating rate of 50°C/hour and held at 1000°C for 1 hour to thereby obtain an alumina-containing calcined body with an alumina content of 0.05 mass% with the balance being the terbium- and yttrium-stabilized zirconia with a terbium content of 0.034 mol% and an yttrium content of 4.0 mol% (a terbium- and yttrium-stabilized zirconia calcined body containing alumina).

The calcined body obtained was heated to a sintering temperature of 1500°C at a heating rate of 10°C/minute, held at the sintering temperature for 2 hours, cooled to room temperature at a cooling rate of 500°C/hour (= 8.3°C/minute) and removed from the sintering furnace to thereby obtain an alumina-containing sintered body with an alumina content of 0.05 mass% with the balance being the terbium- and yttrium-stabilized zirconia with a terbium content of 0.034 mol% and an yttrium content of 4.0 mol% (a terbium- and yttrium-stabilized zirconia sintered body containing alumina). This sintered body was used as a sintered body in Reference Example 1. As for the color tone of the sintered body in Reference Example 1, L*, a* and b* were 73.6, 1.77 and 27.90, respectively.

Examples 1 to 4 and Comparative Examples 1 and 2

Calcined bodies obtained by the same procedure as in Reference Example 1 were heated to a sintering temperature of 1560°C at a heating rate of 177°C/minute and held at the sintering temperature for 15 minutes to obtain sintered bodies, and the sintered bodies were cooled to 1200°C at a cooling rate of 240°C/minute and removed from the sintering furnace. Next, the removed sintered bodies (precursor sintered bodies) were placed in separate firing furnaces pre-heated to respective heat treatment temperatures shown in Table 2, held for 5 minutes to perform heat treatment and removed from the firing furnaces to thereby obtain alumina-containing sintered bodies with an alumina content of 0.05 mass% with the balance being the terbium- and yttrium-stabilized zirconia with a terbium content of 0.034 mol% and an yttrium content of 4.0 mol% (terbium- and yttrium-stabilized zirconia sintered bodies containing alumina). In each of the Examples, the time required from the start of heating of the calcined body to the end of the heat treatment was 30.1 minutes, and the heat treatment time was 5 minutes. In Comparative Example 1, the heat treatment was not performed, and the calcined body removed from the sintering furnace (a precursor sintered body) was used as a sintered body in Comparative Example 1.

[Table 2]

| | Heat treatment temperature [°C] | Color tone | | | | ΔE* | Total light transmittance [%] |
|---|---|---|---|---|---|---|---|
| | | L* | a* | b* | C* | | |
| Comparative Example 1 | | 75.9 | -1.08 | 23.10 | 23.13 | 6.0 | 39 |
| Comparative Example 2 | 500 | 75.9 | -1.42 | 22.50 | 22.54 | 6.7 | - |
| Example 1 | 700 | 75.7 | -0.53 | 25.30 | 25.31 | 4.1 | - |
| Example 2 | 900 | 74.6 | 0.49 | 26.50 | 26.50 | 2.1 | 38 |
| Example 3 | 1100 | 74.6 | -0.18 | 27.80 | 27.80 | 2.5 | 38 |
| Example 4 | 1200 | 75.0 | -0.32 | 25.10 | 25.10 | 3.8 | 38 |

As can be seen from the comparisons of the Examples with Comparative Example 2, the heat treatment step caused ΔE* to decrease, and the heat treatment for 5 minutes caused ΔE* to decrease. Moreover, the heat treatment at 900°C (higher than 700°C and lower than 1100°C) caused ΔE* to decrease significantly. As can be seen in Comparative Examples 1 and 2, when the heat treatment was performed at a heat treatment temperature of 500°C, the effect of reducing ΔE* was not obtained. In Comparative Example 2 in which the heat treatment was performed at 500°C, the chroma C* was smaller than that in Comparative Example 1. However, in each of the Examples, the chroma C* was found to increase by 1.5 or more and 5.0 or less.

Examples 5 to 7

The same procedure as in Example 1 was repeated except that removed sintered bodies were placed in separate firing furnaces pre-heated to 800°C, held for respective holding times shown in Table 3 to perform heat treatment and then removed from the firing furnaces to thereby obtain alumina-containing sintered bodies with an alumina content of 0.05 mass% with the balance being the terbium- and yttrium-stabilized zirconia with a terbium content of 0.034 mol% and an yttrium content of 4.0 mol%

(terbium- and yttrium-stabilized zirconia sintered bodies containing alumina). In Example 5, the time required from the start of heating of the calcined body to the end of the heat treatment and the heat treatment time were 35.1 minutes and 10 minutes, respectively. In Example 6, these times were 40.1 minutes and 15 minutes, respectively. In Example 7, these times were 45.1 minutes and 20 minutes, respectively.

[Table 3]

| | Holding time [min] | Color tone | | | | ΔE* |
|---|---|---|---|---|---|---|
| | | L* | a* | b* | C* | |
| Example 5 | 10 | 74.3 | 0.45 | 26.90 | 26.90 | 1.8 |
| Example 6 | 15 | 74.0 | 1.16 | 28.00 | 28.02 | 0.8 |
| Example 7 | 20 | 73.6 | 1.66 | 28.60 | 28.65 | 0.7 |

Examples 8 to 10

The same procedure as in Example 1 was repeated except that removed sintered bodies were placed in separate firing furnaces pre-heated to 950°C, held for respective holding times shown in Table 4 to perform heat treatment and then removed from the firing furnaces to thereby obtain alumina-containing sintered bodies with an alumina content of 0.05 mass% with the balance being the terbium- and yttrium-stabilized zirconia with a terbium content of 0.034 mol% and an yttrium content of 4.0 mol% (terbium- and yttrium-stabilized zirconia sintered bodies containing alumina). In Example 8, the time required from the start of heating of the calcined body to the end of the heat treatment and the heat treatment time were 35.1 minutes and 10 minutes, respectively. In Example 9, these times were 40.1 minutes and 15 minutes, respectively. In Example 10, these times were 45.1 minutes and 20 minutes, respectively.

[Table 4]

| | Holding time [min] | Color tone | | | | ΔE* |
|---|---|---|---|---|---|---|
| | | L* | a* | b* | C* | |
| Example 8 | 10 | 74.9 | 0.54 | 26.70 | 26.71 | 2.2 |
| Example 9 | 15 | 74.5 | 1.18 | 27.30 | 27.33 | 1.2 |
| Example 10 | 20 | 74.4 | 1.37 | 27.40 | 27.43 | 1.0 |

As can be seen in Examples 5 to 10, as the holding time at the heat treatment temperature increases, the chroma C* tends to increase, and ΔE* tends to decease. Moreover, a color tone equivalent to that of the long-time sintered body tends to be visually recognized.

Example 11

A calcined body obtained by the same procedure as in Reference Example 1 was heated to a sintering temperature of 1560°C at a heating rate of 177°C/minute and held at the sintering temperature for 15 minutes. After the calcined body was held at the sintering temperature, the resulting calcined body was cooled to 1000°C, held at this temperature for 10 minutes to perform heat treatment and then removed from the sintering furnace to thereby obtain an alumina-containing sintered body in this Example with an alumina content of 0.05 mass% with the balance being the terbium- and yttrium-stabilized zirconia with a terbium content of 0.034 mol% and an yttrium content of 4.0 mol% (a terbium- and yttrium-stabilized zirconia sintered body containing alumina). The results are shown in a table below. The time required from the start of heating of the calcined body to the end of the heat treatment was 50.1 minutes, and the heat treatment time was 15 minutes.

[Table 5]

| | Heat treatment temperature [°C] | Color tone | | | | $\Delta E^*$ | Total light transmittance [%] |
|---|---|---|---|---|---|---|---|
| | | L* | a* | b* | C* | | |
| Example 11 | 1000 | 74.4 | 0.38 | 25.30 | 25.30 | 3.5 | 39 |

$\Delta E^*$ was found to decrease also when the heat treatment was performed in the cooling process after the calcined body was held at the sintering temperature. As can be seen, even when heating, sintering, heat treatment and cooling are performed as one sintering cycle, the sintered body manufactured can have a color tone visually equivalent to that of the long-time sintered body.

Reference Example 2 (production of sintered body by long-time sintering)

Yttrium-stabilized zirconia with an yttrium content of 4.0 mol%, $\alpha$-alumina, iron oxyhydroxide and pure water were mixed in a 2.3 L container to obtain a slurry. The slurry was spray-dried at 180°C to thereby obtain an alumina- and iron oxyhydroxide-containing granular powder with an alumina content of 0.05 mass% and an iron content of 0.2 mass% with the balance being the yttrium-stabilized zirconia with an yttrium content of 4.0 mol% (an yttrium-stabilized zirconia granular powder containing alumina and iron oxyhydroxide). The granular powder obtained had a BET specific surface area of 10.2 m$^2$/g and an average granule size of 45 $\mu$m.
The same procedure as in Reference Example 1 was repeated except that the granular powder obtained was used to mold and calcine the granular powder to thereby obtain an alumina- and iron oxide-containing calcined body with an alumina content of 0.05 mass% and an iron content of 0.2 mass% with the balance being the yttrium-stabilized zirconia with an yttrium content of 4.0 mol% (an yttrium-stabilized zirconia calcined body containing alumina and iron oxide).
The same procedure as in Reference Example 1 was repeated except that the calcined body obtained was used to thereby obtain an alumina- and iron oxide-containing sintered body with an alumina content of 0.05 mass% and an iron content of 0.2 mass% with the balance being the yttrium-stabilized zirconia with an yttrium content of 4.0 mol% (an yttrium-stabilized zirconia sintered body containing alumina and iron oxide). As for the color tone of the sintered body in Reference Example 2, L*, a* and b* were 68.2, 3.52 and 20.70, respectively.

Examples 12 and 13 and Comparative Example 3

The same procedure as in Example 1 was repeated except that calcined bodies obtained by the same procedure as in Reference Example 2 were used and that the sintered bodies removed were placed in separate firing furnaces pre-heated to 900°C, held for respective holding times shown in Table 6 to perform heat treatment and then removed from the firing furnaces. Alumina- and iron oxide-containing sintered bodies with an alumina content of 0.05 mass% and an iron content of 0.2 mass% with the balance being the yttrium-stabilized zirconia with an yttrium content of 4.0 mol%
(yttrium-stabilized zirconia sintered bodies containing alumina and iron oxide) were thereby obtained. In Comparative Example 3, the heat treatment was not performed, and the sintered body removed from the sintering furnace was used as a sintered body in Comparative Example 3.

[Table 6]

| | Holding time [min] | Color tone | | | | $\Delta E^*$ |
|---|---|---|---|---|---|---|
| | | L* | a* | b* | C* | |
| Comparative Example 3 | | 65.6 | -1.27 | 13.90 | 13.96 | 8.7 |
| Example 12 | 10 | 67.3 | -0.31 | 16.40 | 16.40 | 5.8 |
| Example 13 | 20 | 68.2 | 0.28 | 17.70 | 17.70 | 4.4 |

As can be seen, even in the colored zirconia sintered bodies containing iron (iron oxide) not dissolved in the zirconia, the heat treatment step caused $\Delta E^*$ to decrease. Moreover, as the heat treatment time increases, the amount of decrease in $\Delta E^*$ increases. In Reference Example 2, $L^*$ was 68.2. It was therefore found that, in the colored zirconia sintered bodies containing iron (iron oxide), the heat treatment caused their lightness $L^*$ to be equivalent to that of the long-time sintered body, so that the color difference $\Delta E^*$ was small.

Examples 14 and 15

Calcined bodies obtained using the same procedure as in Reference Example 2 were heated to a sintering temperature of 1560°C at a heating rate of 177°C/minute and held at the sintering temperature for 15 minutes to obtain sintered bodies, and the sintered bodies were cooled to 1000°C and removed from the sintering furnace. Next, the removed sintered bodies were placed in separate firing furnaces pre-heated to respective heat treatment temperatures shown in Table 7, held for 5 minutes to perform heat treatment and then removed from the firing furnaces to thereby obtain alumina-containing sintered bodies with an alumina content of 0.05 mass% with the balance being the yttrium-stabilized zirconia with an iron content of 0.2 mass% and an yttrium content of 4.0 mol% (yttrium-stabilized zirconia sintered bodies containing alumina and iron oxide). In each of the Examples, the time required from the start of heating of the calcined body to the end of the heat treatment was 39.0 minutes, and the heat treatment time was 5 minutes.

[Table 7]

| | Heat treatment temperature [°C] | Color tone | | | | $\Delta E^*$ |
|---|---|---|---|---|---|---|
| | | $L^*$ | $a^*$ | $b^*$ | $C^*$ | |
| Example 14 | 1100 | 67.4 | 2.74 | 18.82 | 19.02 | 2.2 |
| Example 15 | 1200 | 66.5 | 2.03 | 17.75 | 17.87 | 3.7 |

As can be seen, by performing the heat treatment step at a heat treatment temperature higher than 900°C, $\Delta E^*$ was smaller than that when the heat treatment was performed at 900°C even when the holding time was short. Moreover, when the heat treatment temperature was 1100°C (higher than 900°C and lower than 1200°C), $\Delta E^*$ decreased significantly.

Reference Example 3 (production of sintered body using long-time sintering)

Yttrium-stabilized zirconia with an yttrium content of 4.0 mol%, $\alpha$-alumina, titanium oxide, tricobalt tetroxide and pure water were mixed in a 2.3 L container to obtain a slurry. The slurry was spray-dried at 180°C to thereby obtain an alumina-, titanium oxide- and tricobalt tetroxide-containing granular powder with an alumina content of 0.05 mass%, a titanium content of 0.2 mass% and a cobalt content of 0.04 mass% with the balance being the yttrium-stabilized zirconia with an yttrium content of 4.0 mol% (an yttrium-stabilized zirconia granular powder containing alumina, titanium oxide and tricobalt tetroxide). The granular powder obtained had a BET specific surface area of 10.2 $m^2$/g and an average granule size of 45 $\mu$m.

The same procedure as in Reference Example 1 was repeated except that the granular powder obtained was used to mold and calcine the granular powder to thereby obtain an alumina-, titanium oxide- and tricobalt tetroxide-containing calcined body with an alumina content of 0.05 mass%, a titanium content of 0.2 mass% and a cobalt content of 0.04 mass% with the balance being the yttrium-stabilized zirconia with an yttrium content of 4.0 mol% (an yttrium-stabilized zirconia calcined body containing alumina, titanium oxide and tricobalt tetroxide).

The same procedure as in Reference Example 1 was repeated except that the calcined body obtained was used to thereby obtain an alumina-, titanium oxide- and tricobalt tetroxide-containing sintered body with an alumina content of 0.05 mass%, a titanium content of 0.2 mass% and a cobalt content of 0.04 mass% with the balance being the yttrium-stabilized zirconia with an yttrium content of 4.0 mol% (an yttrium-stabilized zirconia sintered body containing alumina, titanium oxide and tricobalt tetroxide). As for the color tone of the sintered body in Reference Example 3, $L^*$, $a^*$ and $b^*$ were 61.8, 3.33 and -4.96, respectively.

Example 16 and Comparative Example 4

The same procedure as in Example 1 was repeated except that calcined bodies obtained by the same procedure as in Reference Example 3 were used and that the sintered bodies removed were placed in separate firing furnaces pre-heated to 900°C, held for respective holding times shown in Table 8 to perform heat treatment and then removed from the firing furnaces. Alumina-, titanium oxide- and tricobalt tetroxide-containing sintered bodies with an alumina content of 0.05 mass%, a titanium content of 0.2 mass% and a cobalt content of 0.04 mass% with the balance being the yttrium-stabilized zirconia with an yttrium content of 4.0 mol% (yttrium-stabilized zirconia sintered bodies containing alumina, titanium oxide and tricobalt tetroxide) were thereby obtained. In Comparative Example 4, the heat treatment was not performed, and the sintered body removed from the sintering furnace was used as a sintered body in Comparative Example 4.

[Table 8]

| | Holding time [min] | Color tone | | | | ΔE* | Total light transmittance [%] |
|---|---|---|---|---|---|---|---|
| | | L* | a* | b* | C* | | |
| Comparative Example 4 | | 60.3 | 4.29 | -3.45 | 5.51 | 2.3 | 12 |
| Example 16 | 5 | 61.0 | 4.27 | -4.83 | 6.45 | 1.2 | 13 |

As can be seen, even in the colored zirconia sintered bodies containing both titanium (Ti) dissolved in the zirconia and cobalt not dissolved in the zirconia, the heat treatment step caused ΔE* to decrease. Each of the sintered bodies obtained was found to have a color tone visually equivalent to that of the long-time sintered body.

Reference Example 4 (production of sintered body by long-time sintering)

Yttrium-stabilized zirconia with an yttrium content of 4.0 mol%, α-alumina, trimanganese tetroxide and pure water were mixed in a 2.3 L container to obtain a slurry. The slurry was spray-dried at 180°C to thereby obtain an alumina- and trimanganese tetroxide-containing granular powder with an alumina content of 0.05 mass% and a manganese content of 0.01 mass% with the balance being the yttrium-stabilized zirconia with an yttrium content of 4.0 mol% (an yttrium-stabilized zirconia granular powder containing alumina and trimanganese tetroxide). The granular powder obtained had a BET specific surface area of 10.2 m²/g and an average granule size of 45 μm.
The same procedure as in Reference Example 1 was repeated except that the granular powder obtained was used to mold and calcine the granular powder to thereby obtain an alumina- and trimanganese tetroxide-containing calcined body with an alumina content of 0.05 mass% and a manganese content of 0.01 mass% with the balance being the yttrium-stabilized zirconia with an yttrium content of 4.0 mol% (an yttrium-stabilized zirconia calcined body containing alumina and trimanganese tetroxide).
The same procedure as in Reference Example 1 was repeated except that the calcined body obtained was used to thereby obtain an alumina- and trimanganese tetroxide-containing sintered body with an alumina content of 0.05 mass% and a manganese content of 0.01 mass% with the balance being the yttrium-stabilized zirconia with an yttrium content of 4.0 mol% (an yttrium-stabilized zirconia sintered body containing alumina and trimanganese tetroxide). As for the color tone of the sintered body in Reference Example 4, L*, a* and b* were 62.4, 2.63 and -1.88, respectively.

Examples 17 to 19 and Comparative Example 5

The same procedure as in Example 14 was repeated except that calcined bodies obtained by the same procedure as in Reference Example 4 were used and that the sintered bodies removed were placed in separate firing furnaces pre-heated to respective temperatures shown in Table 9, held for respective holding times shown in Table 9 to perform heat treatment and then removed from the firing furnaces. Sintered bodies with an alumina content of 0.05 mass% and a manganese content of 0.01 mass% with the balance being the yttrium-stabilized zirconia with an yttrium content of 4.0 mol% (yttrium-stabilized zirconia sintered bodies containing alumina and trimanganese tetroxide) were thereby obtained. In Comparative Example 5, the heat treatment was not performed, and the sintered body removed from the sintering furnace was used as a sintered body in Comparative Example 5.

[Table 9]

| | Heat treatment temperature [°C] | Color tone | | | | ΔE* |
|---|---|---|---|---|---|---|
| | | L* | a* | b* | C* | |
| Comparative Example 5 | | 70.2 | 2.26 | -2.59 | 3.44 | 7.8 |
| Example 17 | 900 | 67.7 | 2.48 | -2.91 | 3.82 | 5.4 |
| Example 18 | 1000 | 65.1 | 2.47 | -3.47 | 4.26 | 3.2 |
| Example 19 | 1100 | 65.2 | 2.62 | -3.40 | 4.29 | 3.2 |

As can be seen, even in the colored zirconia sintered bodies containing manganese, the heat treatment step caused ΔE* to decrease. Each of the sintered bodies obtained was found to have a color tone visually equivalent to that of the long-time sintered body. As can also be seen, when the heat treatment temperature was 1000°C or higher and 1100°C or lower, ΔE* decreased significantly.

Reference Example 5 (production of sintered body by long-time sintering)

Terbium-, erbium- and yttrium-stabilized zirconia with a terbium content of 0.002 mol%, an erbium content of 0.050 mol% and an yttrium content of 4.0 mol%, α-alumina, tricobalt tetroxide, titanium oxide and pure water were mixed in a 2.3 L container to obtain a slurry. The slurry was spray-dried at 180°C to thereby obtain an alumina-, tricobalt tetroxide- and titanium oxide-containing granular powder with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (a terbium-, erbium- and yttrium-stabilized zirconia granular powder containing alumina, tricobalt tetroxide and titanium oxide). The granular powder obtained had a BET specific surface area of 10.2 $m^2$/g and an average granule size of 43 μm.
The same procedure as in Reference Example 1 was repeated except that the granular powder obtained was used to mold, calcine and sinter the granular powder to thereby obtain a sintered body, and the sintered body obtained was used as a sintered body in Reference Example 5. As for the color tone of the sintered body in Reference Example 5, L*, a* and b* were 76.1, -0.24 and 3.95, respectively.

Reference Example 6 (production of sintered body by long-time sintering)

Terbium-, erbium- and yttrium-stabilized zirconia with a terbium content of 0.007 mol%, an erbium content of 0.050 mol% and an yttrium content of 4.0 mol%, α-alumina, tricobalt tetroxide, titanium oxide and pure water were placed in a 2.3 L container and mixed using a ball mill to obtain a slurry. The slurry was spray-dried at 180°C to thereby obtain an alumina-, tricobalt tetroxide- and titanium oxide-containing granular powder with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (a terbium-, erbium- and yttrium-stabilized zirconia granular powder containing alumina, tricobalt tetroxide and titanium oxide). The granular powder obtained had a BET specific surface area of 10.1 $m^2$/g and an average granule size of 44 μm.
The same procedure as in Reference Example 1 was repeated except that the granular powder obtained was used to mold, calcine and sinter the granular powder to thereby obtain a sintered body, and the sintered body obtained was used as a sintered body in Reference Example 6. As for the color tone of the sintered body in Reference Example 6, L*, a* and b* were 71.9, -0.23 and 10.46, respectively.

Reference Example 7 (production of sintered body by long-time sintering)

Terbium-, erbium- and yttrium-stabilized zirconia with a terbium content of 0.016 mol%, an erbium content of 0.254 mol% and an yttrium content of 3.8 mol%, α-alumina, tricobalt tetroxide, titanium oxide and pure water were placed in a 2.3 L container and mixed using a ball mill to obtain a slurry. The slurry was spray-dried at 180°C to thereby obtain an alumina-, tricobalt tetroxide- and titanium oxide-containing granular powder with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (a terbium-, erbium- and yttrium-stabilized zirconia granular powder containing alumina, tricobalt tetroxide and titanium oxide). The granular powder obtained had a BET specific surface area of 10.1 $m^2$/g and an average granule size of 44 μm.
The same procedure as in Reference Example 1 was repeated except that the granular powder obtained was used to mold, calcine and sinter the granular powder to thereby obtain a sintered body, and the sintered body obtained was used as a sintered body in Reference Example 7. As for the color tone of the sintered body in Reference Example 7, L*, a* and b* were 67.8, -1.81 and 12.93, respectively.

Reference Example 8 (production of sintered body by long-time sintering)

Erbium- and yttrium-stabilized zirconia with an erbium content of 0.033 mol% and an yttrium content of 3.9 mol%, α-alumina, iron oxyhydroxide, tricobalt tetroxide and pure water were placed in a 2.3 L container and mixed using a ball mill to obtain a slurry. The slurry was spray-dried at 180°C to thereby obtain an alumina-, iron oxyhydroxide- and tricobalt tetroxide-containing granular powder with an alumina content of 0.05 mass%, an iron content of 0.047 mass% and a cobalt content of 0.003 mass% with the balance being the erbium- and yttrium-stabilized zirconia with an erbium content of 0.033 mol% and an yttrium content of 3.9 mol% (an erbium- and yttrium-stabilized zirconia granular powder containing alumina, iron oxyhydroxide and tricobalt tetroxide). The granular powder obtained had a BET specific surface area of 10.2 $m^2$/g and an average granule size of 44 $\mu$m.

The same procedure as in Reference Example 1 was repeated except that the granular powder obtained was used to mold, calcine and sinter the granular powder to thereby obtain a sintered body, and the sintered body obtained was used as a sintered body in Reference Example 8. As for the color tone of the sintered body in Reference Example 8, L*, a* and b* were 75.2, -0.97 and 7.09, respectively.

Reference Example 9 (production of sintered body by long-time sintering)

Erbium- and yttrium-stabilized zirconia with an erbium content of 0.033 mol% and an yttrium content of 3.8 mol%, $\alpha$-alumina, iron oxyhydroxide, tricobalt tetroxide and pure water were placed in a 2.3 L container and mixed using a ball mill to obtain a slurry. The slurry was spray-dried at 180°C to thereby obtain an alumina-, iron oxyhydroxide- and tricobalt tetroxide-containing granular powder with an alumina content of 0.05 mass%, an iron content of 0.128 mass% and a cobalt content of 0.006 mass% with the balance being the erbium- and yttrium-stabilized zirconia with an erbium content of 0.033 mol% and an yttrium content of 3.8 mol% (an erbium- and yttrium-stabilized zirconia granular powder containing alumina, iron oxyhydroxide and tricobalt tetroxide). The granular powder obtained had a BET specific surface area of 10.2 $m^2$/g and an average granule size of 44 $\mu$m.

The same procedure as in Reference Example 1 was repeated except that the granular powder obtained was used to mold, calcine and sinter the granular powder to thereby obtain a sintered body, and the sintered body obtained was used as a sintered body in Reference Example 9. As for the color tone of the sintered body in Reference Example 9, L*, a* and b* were 68.5, 1.76 and 14.00, respectively.

Examples 20 to 22

Calcined bodies obtained by the same procedure as in Reference Example 5 were heated to a sintering temperature of 1560°C at a heating rate of 177°C/minute and held at the sintering temperature for 15 minutes. The resulting calcined bodies held at the sintering temperature were cooled to 600°C at a cooling rate of 20°C/minute in the range of from 1200°C to the heat treatment temperature and held at the heat treatment temperature for respective holding times shown in Table 10 to perform heat treatment and then removed from the sintering furnaces to thereby obtain alumina-, tricobalt tetroxide- and titanium oxide-containing sintered bodies in Examples 20 to 22 with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (terbium-, erbium- and yttrium-stabilized zirconia sintered bodies containing alumina, tricobalt tetroxide and titanium oxide). The time required from the start of heating of the calcined body to the end of the heat treatment was 65.0 minutes in Example 20, 70.0 minutes in Example 21 and 80.0 minutes in Example 22. In each Example, the retention time in the cooling process after the calcined body was held at the sintering temperature was 31.0 minutes.

Examples 23 and 24

Calcined bodies obtained by the same procedure as in Reference Example 5 were heated to a sintering temperature of 1560°C at a heating rate of 177°C/minute and held at the sintering temperature for 15 minutes. The resulting calcined bodies held at the sintering temperature were cooled to 900°C at a cooling rate of 35.0°C/minute in the range of from 1200°C to the heat treatment temperature and held at the heat treatment temperature for respective holding times shown in Table 10 to perform heat treatment and then removed from the sintering furnaces to thereby obtain alumina-, tricobalt tetroxide- and titanium oxide-containing sintered bodies in Examples 23 and 24 with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (terbium-, erbium- and yttrium-stabilized zirconia sintered bodies containing alumina, tricobalt tetroxide and titanium oxide). The time required from the start of heating of the calcined body to the end of the heat treatment was 41.8 minutes in Example 23 and 46.8 minutes in Example 24. In each Example, the retention time in the cooling process after the calcined body was held at the sintering temperature was 10.0 minutes.

Examples 25 and 26

Calcined bodies obtained by the same procedure as in Reference Example 5 were heated to a sintering temperature of 1560°C at a heating rate of 177°C/minute and held at the sintering temperature for 15 minutes. The resulting calcined bodies held at the sintering temperature were cooled to 1000°C at a cooling rate of 40.0°C/minute in the range of from 1200°C to the heat treatment temperature and held at the heat treatment temperature for respective holding times shown in Table 10 to perform heat treatment and then removed from the sintering furnaces to thereby obtain alumina-, tricobalt tetroxide- and titanium oxide-containing sintered bodies in Examples 25 and 26 with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (terbium-, erbium- and yttrium-stabilized zirconia sintered bodies containing alumina, tricobalt tetroxide and titanium oxide). The time required from the start of heating of the calcined body to the end of the heat treatment was 39.0 minutes in Example 25 and 44.0 minutes in Example 26. In each Example, the retention time in the cooling process after the calcined body was held at the sintering temperature was 5.0 minutes.

Examples 27 and 28

Calcined bodies obtained by the same procedure as in Reference Example 5 were heated to a sintering temperature of 1560°C at a heating rate of 177°C/minute and held at the sintering temperature for 15 minutes. The resulting calcined bodies held at the sintering temperature were cooled to 1200°C and held at this temperature for respective holding times shown in Table 10 to perform heat treatment, cooled to 1000°C in the sintering furnaces and removed from the furnaces to thereby obtain alumina-, tricobalt tetroxide- and titanium oxide-containing sintered bodies in Examples 27 and 28 with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (terbium-, erbium- and yttrium-stabilized zirconia sintered bodies containing alumina, tricobalt tetroxide and titanium oxide). The time required from the start of heating of the calcined body to the end of the heat treatment was 39.0 minutes in Example 27 and 44.0 minutes in Example 28.

Comparative Example 6

A calcined body obtained by the same procedure as in Reference Example 5 was heated to a sintering temperature of 1560°C at a heating rate of 177°C/minute and held at the sintering temperature for 15 minutes. The resulting calcined body held at the sintering temperature was cooled to 1000°C and removed from the sintering furnace to thereby obtain an alumina-, tricobalt tetroxide- and titanium oxide-containing sintered body with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (a terbium-, erbium- and yttrium-stabilized zirconia sintered body containing alumina, tricobalt tetroxide and titanium oxide). The sintered body obtained was used as a sintered body in Comparative Example 6.

Comparative Example 7

A calcined body obtained by the same procedure as in Reference Example 5 was heated to a sintering temperature of 1560°C at a heating rate of 177°C/minute and held at the sintering temperature for 15 minutes. The resulting calcined body held at the sintering temperature was cooled to 1300°C, held at this temperature to perform heat treatment, cooled to 1000°C in the sintering furnace and removed from the furnace to thereby obtain an alumina-, tricobalt tetroxide- and titanium oxide-containing sintered body with an alumina content of 0.05 mass%, a cobalt content of 0.003 mass% and a titanium content of 0.015 mass% with the balance being the terbium-, erbium- and yttrium-stabilized zirconia with a terbium content of 0.002 mol%, an erbium content of 0.050 mol% and an yttrium content of 4.0 mol% (a terbium-, erbium- and yttrium-stabilized zirconia sintered body containing alumina, tricobalt tetroxide and titanium oxide). The time required from the start of heating of the calcined body to the end of the heat treatment was 44.0 minutes.

Examples 29 to 31

Calcined bodies obtained by the same procedure as in Reference Example 6 were sintered and subjected to heat treatment using the same procedure as in Examples 20 to 22 to thereby obtain alumina-, tricobalt tetroxide- and titanium oxide-containing sintered bodies in Examples 29 to 31 with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (terbium-, erbium- and yttrium-stabilized zirconia sintered bodies containing alumina, tricobalt tetroxide and titanium oxide).

Examples 32 and 33

Calcined bodies obtained by the same procedure as in Reference Example 6 were sintered and subjected to heat treatment using the same procedure as in Examples 23 and 24 to thereby obtain alumina-, tricobalt tetroxide- and titanium oxide-containing sintered bodies in Examples 32 and 33 with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (terbium-, erbium- and yttrium-stabilized zirconia sintered bodies containing alumina, tricobalt tetroxide and titanium oxide).

Examples 34 and 35

Calcined bodies obtained by the same procedure as in Reference Example 6 were sintered and subjected to heat treatment using the same procedure as in Examples 25 and 26 to thereby obtain alumina-, tricobalt tetroxide- and titanium oxide-containing sintered bodies in Examples 34 and 35 with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (terbium-, erbium- and yttrium-stabilized zirconia sintered bodies containing alumina, tricobalt tetroxide and titanium oxide).

Examples 36 and 37

Calcined bodies obtained by the same procedure as in Reference Example 6 were sintered using the same procedure as in Examples 27 and 28 to thereby obtain alumina-, tricobalt tetroxide- and titanium oxide-containing sintered bodies in Examples 36 and 37 with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (terbium-, erbium- and yttrium-stabilized zirconia sintered bodies containing alumina, tricobalt tetroxide and titanium oxide).

Comparative Example 8

A calcined body obtained by the same procedure as in Reference Example 6 was sintered using the same procedure as in Comparative Example 6 to thereby obtain an alumina-, tricobalt tetroxide- and titanium oxide-containing sintered body with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (a terbium-, erbium- and yttrium-stabilized zirconia sintered body containing alumina, tricobalt tetroxide and titanium oxide), and the sintered body obtained was used as a sintered body in Comparative Example 8.

Comparative Example 9

A calcined body obtained by the same procedure as in Reference Example 6 was sintered and subjected to heat treatment using the same procedure as in Comparative Example 7 to thereby obtain an alumina-, tricobalt tetroxide- and titanium oxide-containing sintered body with an alumina content of 0.05 mass%, a cobalt content of 0.007 mass% and a titanium content of 0.035 mass% with the balance being the terbium-, erbium- and yttrium-stabilized zirconia with a terbium content of 0.007 mol%, an erbium content of 0.050 mol% and an yttrium content of 4.0 mol% (a terbium-, erbium- and yttrium-stabilized zirconia sintered body containing alumina, tricobalt tetroxide and titanium oxide), and the sintered body obtained was used as a sintered body in Comparative Example 9.

Examples 38 to 40

Calcined bodies obtained by the same procedure as in Reference Example 7 were sintered and subjected to heat treatment using the same procedure as in Examples 20 to 22 to thereby obtain alumina-, tricobalt tetroxide- and titanium oxide-containing sintered bodies in Examples 38 to 40 with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (terbium-, erbium- and yttrium-stabilized zirconia sintered bodies containing alumina, tricobalt tetroxide and titanium oxide).

Examples 41 and 42

Calcined bodies obtained by the same procedure as in Reference Example 7 were sintered and subjected to heat treatment using the same procedure as in Examples 23 and 24 to thereby obtain alumina-, tricobalt tetroxide- and titanium oxide-containing sintered bodies in Examples 41 and 42 with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (terbium-, erbium- and yttrium-stabilized zirconia sintered bodies containing alumina, tricobalt tetroxide and titanium oxide).

Examples 43 and 44

Calcined bodies obtained by the same procedure as in Reference Example 7 were sintered and subjected to heat treatment using the same procedure as in Examples 25 and 26 to thereby obtain alumina-, tricobalt tetroxide- and titanium oxide-containing sintered bodies in Examples 43 and 44 with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (terbium-, erbium- and yttrium-stabilized zirconia sintered bodies containing alumina, tricobalt tetroxide and titanium oxide).

Examples 45 and 46

Calcined bodies obtained by the same procedure as in Reference Example 7 were sintered and subjected to heat treatment using the same procedure as in Examples 27 and 28 to thereby obtain alumina-, tricobalt tetroxide- and titanium oxide-containing sintered bodies in Examples 45 and 46 with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (terbium-, erbium- and yttrium-stabilized zirconia sintered bodies containing alumina, tricobalt tetroxide and titanium oxide).

Comparative Example 10

A calcined body obtained by the same procedure as in Reference Example 7 was sintered using the same procedure as in Comparative Example 6 to thereby obtain an alumina-, tricobalt tetroxide- and titanium oxide-containing sintered body with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (a terbium-, erbium- and yttrium-stabilized zirconia sintered body containing alumina, tricobalt tetroxide and titanium oxide), and the sintered body obtained was used as a sintered body in Comparative Example 10.

Comparative Example 11

A calcined body obtained by the same procedure as in Reference Example 7 was sintered and subjected to heat treatment using the same procedure as in Comparative Example 7 to thereby obtain an alumina-, tricobalt tetroxide- and titanium oxide-containing sintered body with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (a terbium-, erbium- and yttrium-stabilized zirconia sintered body containing alumina, tricobalt tetroxide and titanium oxide), and the sintered body obtained was used as a sintered body in Comparative Example 11.

[Table 10]

| | Heat treatment temperature [°C] | Holding time [min] | Color tone | | | | ΔE* |
|---|---|---|---|---|---|---|---|
| | | | L* | a* | b* | C* | |
| Example 20 | 600 | 5 | 77.6 | 0.12 | 2.99 | 2.99 | 1.8 |
| Example 21 | 600 | 10 | 77.4 | 0.13 | 3.28 | 3.28 | 1.5 |

(continued)

| | Heat treatment temperature [°C] | Holding time [min] | Color tone | | | | ΔE* |
|---|---|---|---|---|---|---|---|
| | | | L* | a* | b* | C* | |
| Example 22 | 600 | 20 | 77.3 | 0.16 | 3.31 | 3.31 | 1.5 |
| Example 23 | 900 | 5 | 77.6 | -0.12 | 3.05 | 3.05 | 1.8 |
| Example 24 | 900 | 10 | 77.1 | -0.09 | 3.35 | 3.35 | 1.2 |
| Example 25 | 1000 | 5 | 77.6 | 0.30 | 1.86 | 1.88 | 2.6 |
| Example 26 | 1000 | 10 | 77.2 | 0.31 | 2.01 | 2.03 | 2.3 |
| Example 27 | 1200 | 5 | 78.0 | 0.28 | 1.56 | 1.58 | 3.1 |
| Example 28 | 1200 | 10 | 77.9 | 0.33 | 1.85 | 1.88 | 2.8 |
| Comparative Example 6 | | | 78.6 | 0.25 | 0.85 | 0.89 | 4.0 |
| Comparative Example 7 | 1300 | 10 | 78.4 | 0.22 | 1.11 | 1.13 | 3.7 |
| Example 29 | 600 | 5 | 73.8 | 0.22 | 8.24 | 8.24 | 2.9 |
| Example 30 | 600 | 10 | 73.4 | 0.23 | 8.42 | 8.42 | 2.6 |
| Example 31 | 600 | 20 | 73.3 | 0.25 | 8.55 | 8.55 | 2.4 |
| Example 32 | 900 | 5 | 73.8 | -0.11 | 8.76 | 8.76 | 2.5 |
| Example 33 | 900 | 10 | 73.2 | -0.12 | 8.92 | 8.92 | 2.0 |
| Example 34 | 1000 | 5 | 72.4 | 0.26 | 7.42 | 7.42 | 3.1 |
| Example 35 | 1000 | 10 | 72.3 | 0.22 | 7.80 | 7.80 | 2.7 |
| Example 36 | 1200 | 5 | 73.2 | 0.25 | 6.84 | 6.84 | 3.9 |
| Example 37 | 1200 | 10 | 73.0 | 0.22 | 7.06 | 7.06 | 3.6 |
| Comparative Example 8 | | | 74.0 | -0.12 | 5.29 | 5.29 | 5.6 |
| Comparative Example 9 | 1300 | 10 | 73.8 | -0.16 | 5.59 | 5.59 | 5.2 |
| Example 38 | 600 | 5 | 69.8 | 1.50 | 9.56 | 9.68 | 3.9 |
| Example 39 | 600 | 10 | 69.7 | 1.51 | 9.75 | 9.87 | 3.7 |
| Example 40 | 600 | 20 | 69.4 | 1.53 | 10.22 | 10.33 | 3.2 |
| Example 41 | 900 | 5 | 68.9 | 1.38 | 10.23 | 10.32 | 3.0 |
| Example 42 | 900 | 10 | 68.0 | 1.51 | 10.61 | 10.72 | 2.4 |
| Example 43 | 1000 | 5 | 69.1 | 1.98 | 9.86 | 10.06 | 3.3 |
| Example 44 | 1000 | 10 | 68.3 | 1.97 | 10.23 | 10.42 | 2.8 |
| Example 45 | 1200 | 5 | 69.9 | 1.75 | 9.07 | 9.24 | 4.4 |
| Example 46 | 1200 | 10 | 69.6 | 1.67 | 9.32 | 9.47 | 4.0 |
| Comparative Example 10 | | | 70.5 | 1.34 | 6.82 | 6.95 | 6.7 |
| Comparative Example 11 | 1300 | 10 | 70.4 | 1.45 | 7.15 | 7.30 | 6.3 |

As can be seen in Examples and Comparative Examples 6, 8 and 10, in the sintered bodies containing terbium, erbium, cobalt and titanium as coloring elements, the heat treatment step caused ΔE* to decrease. As can be seen in Comparative Examples 7, 9 and 11, when the heat treatment was performed with the heat treatment temperature set to 1300°C, the effect of reducing ΔE* was not obtained. In each of Examples 20 to 28, the chroma C* was larger by 0.7 or more than that in Comparative Example 6. In each of Examples 29 and 37, the chroma C* was larger by 1.6 or more than that in Comparative Example 8. In each of Examples 38 to 46, the chroma C* was larger by 2.3 or more than that in Comparative Example 10. The chroma C* was found to increase in these Examples.

As can be seen, the sintered bodies in Examples 20 to 28 each have a color tone corresponding to C1 in the Vita classical shade guide, and the sintered bodies in Examples 29 to 37 each have a color tone corresponding to C3 in the Vita classical shade guide. The sintered bodies in Examples 38 to 46 each have a color tone corresponding to C4 in the Vita classical shade guide.

Examples 47 and 48

Calcined bodies obtained by the same procedure as in Reference Example 8 were heated to a sintering temperature of 1560°C at a heating rate of 177°C/minute and held at the sintering temperature for 15 minutes. The resulting calcined bodies held at the sintering temperature were cooled to 600°C at a cooling rate of 20.0°C/minute in the range of from 1200°C to the heat treatment temperature, held at this temperature for respective holding times shown in Table 11 to perform heat treatment and removed from the sintering furnaces to thereby obtain alumina-, iron oxide- and tricobalt tetroxide-containing sintered bodies in Examples 47 and 48 with an alumina content of 0.05 mass%, an iron content of 0.047 mass% and a cobalt content of 0.003 mass% with the balance being the erbium- and yttrium-stabilized zirconia with an erbium content of 0.033 mol% and an yttrium content of 3.9 mol% (erbium- and yttrium-stabilized zirconia sintered bodies containing alumina, iron oxide and tricobalt tetroxide). The time required from the start of heating of the calcined body to the end of the heat treatment was 65.0 minutes in Example 47 and 70.0 minutes in Example 48. In each of the Examples, the retention time in the cooling process after the calcined body was held at the sintering temperature was 31.0 minutes.

Examples 49 and 50

Calcined bodies obtained by the same procedure as in Reference Example 8 were sintered and subjected to heat treatment using the same procedure as in Examples 27 and 28 to thereby obtain alumina-, iron oxide- and tricobalt tetroxide-containing sintered bodies in Examples 49 and 50 with an alumina content of 0.05 mass%, an iron content of 0.047 mass% and a cobalt content of 0.003 mass% with the balance being the erbium- and yttrium-stabilized zirconia with an erbium content of 0.033 mol% and an yttrium content of 3.9 mol% (erbium- and yttrium-stabilized zirconia sintered bodies containing alumina, iron oxide and tricobalt tetroxide).

Comparative Example 12

A calcined body obtained by the same procedure as in Reference Example 8 was sintered using the same procedure as in Comparative Example 6 to thereby obtain an alumina-, iron oxide- and tricobalt tetroxide-containing sintered body with an alumina content of 0.05 mass%, an iron content of 0.047 mass% and a cobalt content of 0.003 mass% with the balance being the erbium- and yttrium-stabilized zirconia with an erbium content of 0.033 mol% and an yttrium content of 3.9 mol% (an erbium- and yttrium-stabilized zirconia sintered body containing alumina, iron oxide and tricobalt tetroxide), and the sintered body obtained was used as a sintered body in Comparative Example 12.

Comparative Example 13

A calcined body obtained by the same procedure as in Reference Example 8 was sintered and subjected to heat treatment using the same procedure as in Comparative Example 7 to thereby obtain an alumina-, iron oxide- and tricobalt tetroxide-containing sintered body with an alumina content of 0.05 mass%, an iron content of 0.047 mass% and a cobalt content of 0.003 mass% with the balance being the erbium- and yttrium-stabilized zirconia with an erbium content of 0.033 mol% and an yttrium content of 3.9 mol% (an erbium- and yttrium-stabilized zirconia sintered body containing alumina, iron oxide and tricobalt tetroxide), and the sintered body obtained was used as a sintered body in Comparative Example 13.

Examples 51 and 52

Calcined bodies obtained by the same procedure as in Reference Example 9 were sintered and subjected to heat treatment using the same procedure as in Examples 47 and 48 to thereby obtain alumina-, iron oxide- and tricobalt tetroxide-containing sintered bodies in Examples 51 and 52 with an alumina content of 0.05 mass%, an iron content of 0.128 mass% and a cobalt content of 0.006 mass% with the balance being the erbium- and yttrium-stabilized zirconia with an erbium content of 0.033 mol% and an yttrium content of 3.8 mol% (erbium- and yttrium-stabilized zirconia sintered bodies containing alumina, iron oxide and tricobalt tetroxide).

Examples 53 and 54

Calcined bodies obtained by the same procedure as in Reference Example 9 were sintered and subjected to heat treatment using the same procedure as in Examples 27 and 28 to thereby obtain alumina-, iron oxide- and tricobalt tetroxide-containing sintered bodies in Examples 53 and 54 with an alumina content of 0.05 mass%, an iron content of 0.128 mass% and a cobalt content of 0.006 mass% with the balance being the erbium- and yttrium-stabilized zirconia with an erbium content of 0.033 mol% and an yttrium content of 3.8 mol% (erbium- and yttrium-stabilized zirconia sintered bodies containing alumina, iron oxide and tricobalt tetroxide).

Comparative Example 14

A calcined body obtained by the same procedure as in Reference Example 9 was sintered using the same procedure as in Comparative Example 6 to thereby obtain an alumina-, iron oxide- and tricobalt tetroxide-containing sintered body with an alumina content of 0.05 mass%, an iron content of 0.128 mass% and a cobalt content of 0.006 mass% with the balance being the erbium- and yttrium-stabilized zirconia with an erbium content of 0.033 mol% and an yttrium content of 3.8 mol% (an erbium- and yttrium-stabilized zirconia sintered body containing alumina, iron oxide and tricobalt tetroxide), and the sintered body obtained was used as a sintered body in Comparative Example 14.

Comparative Example 15

A calcined body obtained by the same procedure as in Reference Example 9 was sintered and subjected to heat treatment using the same procedure as in Comparative Example 7 to thereby obtain an alumina-, iron oxide- and tricobalt tetroxide-containing sintered body with an alumina content of 0.05 mass%, an iron content of 0.128 mass% and a cobalt content of 0.006 mass% with the balance being the erbium- and yttrium-stabilized zirconia with an erbium content of 0.033 mol% and an yttrium content of 3.8 mol% (an erbium- and yttrium-stabilized zirconia sintered body containing alumina, iron oxide and tricobalt tetroxide), and the sintered body obtained was used as a sintered body in Comparative Example 15.

[Table 11]

| | Heat treatment temperature [°C] | Holding time [min] | Color tone | | | | ΔE* |
| --- | --- | --- | --- | --- | --- | --- | --- |
| | | | L* | a* | b* | C* | |
| Example 47 | 600 | 5 | 75.5 | -0.95 | 6.55 | 6.62 | 0.6 |
| Example 48 | 600 | 10 | 75.5 | -0.88 | 6.80 | 6.86 | 0.4 |
| Example 49 | 1200 | 5 | 76.2 | -1.65 | 6.53 | 6.74 | 1.3 |
| Example 50 | 1200 | 10 | 76.3 | -1.50 | 6.65 | 6.82 | 1.3 |
| Comparative Example 12 | | | 74.1 | -2.15 | 5.15 | 5.58 | 2.5 |
| Comparative Example 13 | 1300 | 10 | 74.1 | -2.01 | 5.39 | 5.75 | 2.3 |
| Example 51 | 600 | 5 | 69.1 | 0.89 | 13.62 | 13.65 | 1.1 |
| Example 52 | 600 | 10 | 69.3 | 1.26 | 13.76 | 13.82 | 1.0 |
| Example 53 | 1200 | 5 | 69.0 | 0.53 | 13.38 | 13.39 | 1.5 |
| Example 54 | 1200 | 10 | 69.3 | 0.66 | 13.52 | 13.54 | 1.4 |
| Comparative Example 14 | | | 67.7 | -1.24 | 11.32 | 11.39 | 4.1 |
| Comparative Example 15 | 1300 | 10 | 67.9 | -1.13 | 11.62 | 11.67 | 3.8 |

As can be seen in Examples and Comparative Examples 12 and 14, in sintered bodies containing iron, erbium, cobalt and titanium as coloring elements, the heat treatment step caused ΔE* to decrease. As can be seen in Comparative Examples 13 and 15, when the heat treatment was performed with the heat treatment temperature set to 1300°C, the effect of reducing ΔE* was not obtained. In each of Examples 47 to 50, the chroma C* was larger by 1.0 or more than that in Comparative Example 12. In each of Examples 51 to 54, the chroma C* was larger by 2.0 or more than that in Comparative Example 14. The chroma C* was found to increase in these Examples.
As can be seen, the sintered bodies in Examples 47 to 50 each have a color tone corresponding to C1 in the Vita classical shade guide, and the sintered bodies in Examples 51 to 54 each have a color tone corresponding to C4 in the Vita classical shade guide.

Comparative Example 16

The opposite surfaces of the sintered body obtained in Comparative Example 10 were mirror-polished until the surface roughness was reduced to Ra ≤ 0.02 μm, and a commercial glazing agent (product name: CERABIEN ZR manufactured by Kuraray Noritake Dental Inc.) was applied to one side of the sintered body. The resulting sintered body was placed in a firing furnace pre-heated to 900°C, held for 10 minutes to perform heat treatment and removed from the firing furnace to thereby obtain an alumina-, tricobalt tetroxide- and titanium oxide-containing sintered body with an alumina content of 0.05 mass%, a cobalt content of 0.007 mass% and a titanium content of 0.035 mass% with the balance being the terbium-, erbium- and yttrium-stabilized zirconia with a terbium content of 0.016 mol%, an erbium content of 0.254 mol% and an yttrium content of 3.8 mol% (a terbium-, erbium- and yttrium-stabilized zirconia sintered body containing alumina, tricobalt tetroxide and titanium oxide). One side of the sintered body had been coated with the glazing agent.

Comparative Example 17

The same procedure as in Comparative Example 16 was repeated except that the sintered body obtained in Comparative Example 14 was used to thereby obtain an alumina-, iron oxide- and tricobalt tetroxide-containing sintered body with an alumina content of 0.05 mass%, an iron content of 0.128 mass% and a cobalt content of 0.006 mass% with the balance being the erbium- and yttrium-stabilized zirconia with an erbium content of 0.033 mol% and an yttrium content of 3.8 mol% (an erbium- and yttrium-stabilized zirconia sintered body containing alumina, iron oxide and tricobalt tetroxide). One side of the sintered body had been coated with the glazing agent.

The surfaces of the sintered bodies in Comparative Examples 16 and 17 that had been covered with the glazing agent were mirror-polished to remove the glazing agent, and the color tone of the surface of each sintered body to which the glazing agent was applied and which had a surface roughness of Ra ≤ 0.02 μm was measured.

[Table 12]

| | Heat treatment temperature [°C] | Holding time [min] | Color tone | | | | ΔE* |
| --- | --- | --- | --- | --- | --- | --- | --- |
| | | | L* | a* | b* | C* | |
| Comparative Example 16 | 900 | 10 | 71.7 | 1.02 | 5.26 | 5.36 | 8.7 |
| Comparative Example 17 | 900 | 10 | 67.6 | -1.12 | 11.03 | 11.09 | 4.2 |

As can be seen in Comparative Examples 16 and 17, in the colored zirconia sintered bodies each having a surface coated with the glazing agent, the effect of reducing ΔE* through the heat treatment step could not be obtained.

The entire contents of the specification, claims and abstract of Japanese Patent Application No. 2021-076347 filed on April 18, Reiwa 3 are cited herein and incorporated as the disclosure of the present specification.

**Claims**

1. A method for manufacturing a sintered body, the method comprising a heat treatment step of subjecting a sintered body of zirconia containing a coloring element to heat treatment at 600°C or higher and 1200°C or lower.

2. The method for manufacturing according to claim 1, wherein the sintered body of the zirconia containing the coloring element is a sintered body in the state of having been sintered by atmospheric pressure sintering.

3. The method for manufacturing according to claim 1 or 2, wherein the sintered body of the zirconia containing the coloring element is a sintered body in the state of having been sintered in an oxidizing atmosphere.

4. The method for manufacturing according to claim 1 or 2, wherein, in the heat treatment, the sintered body is held at a heat treatment temperature of 600°C or higher and 1200°C or lower.

5. The method for manufacturing according to claim 1 or 2, wherein the temperature range of the heat treatment is within a temperature range of ±50°C.

6. The method for manufacturing according to claim 1 or 2, wherein a holding time at the temperature of the heat treatment is shorter than 2 hours.

7. The method for manufacturing according to claim 1 or 2, wherein an atmosphere of the heat treatment is an oxidizing atmosphere.

8. The method for manufacturing according to claim 1 or 2, wherein the heat treatment step is the step of placing the sintered body of the zirconia containing the coloring element in a firing furnace heated to the temperature of the heat treatment to thereby subject the sintered body to the heat treatment.

9. The method for manufacturing according to claim 1 or 2, the method further comprising, before the heat treatment step, the step of sintering colored zirconia in an oxidizing atmosphere to thereby obtain the sintered body of the zirconia containing the coloring element.

10. The method for manufacturing according to claim 1 or 2, wherein the heat treatment step is the step of cooling the sintered body held at a sintering temperature to the temperature of the heat treatment and holding the sintered body at the temperature of the heat treatment to perform the heat treatment.

11. The method for manufacturing according to claim 1 or 2, wherein the sintered body obtained through the heat treatment step is at least any of

a colored zirconia sintered body that has a lightness different by 5 or less from a lightness of the sintered body of the zirconia containing the coloring element before the heat treatment step and that has a chroma higher by 0.3 or more than a chroma of the sintered body of the zirconia containing the coloring element before the heat treatment step and

a colored zirconia sintered body that has a lightness different by more than 5 from the lightness of the sintered body of the zirconia containing the coloring element before the heat treatment step and that has a chroma different by 10 or less from the chroma of the sintered body of the zirconia containing the coloring element before the heat treatment step.

12. The method for manufacturing according to claim 1 or 2, wherein the coloring element is at least one selected from the group consisting of iron (Fe), cobalt (Co), manganese (Mn), nickel (Ni), copper (Cu), titanium (Ti), chromium (Cr), cerium (Ce), praseodymium (Pr), neodymium (Nd), erbium (Er), terbium (Tb) and ytterbium (Yb).

13. The method for manufacturing according to claim 1 or 2, wherein the zirconia contains a stabilizing element.

14. The method for manufacturing according to claim 1 or 2, wherein the zirconia contains at least yttrium.

15. The method for manufacturing according to claim 1 or 2, wherein the sintered body of the zirconia containing the coloring element contains alumina ($Al_2O_3$).

## INTERNATIONAL SEARCH REPORT

| International application No. |
|---|
| **PCT/JP2022/018763** |

**A. CLASSIFICATION OF SUBJECT MATTER**

*C04B 41/80*(2006.01)i; *A61C 5/70*(2017.01)i; *A61C 13/083*(2006.01)i; *C04B 35/488*(2006.01)i
FI:   C04B41/80 A; A61C5/70; A61C13/083; C04B35/488

According to International Patent Classification (IPC) or to both national classification and IPC

**B. FIELDS SEARCHED**

Minimum documentation searched (classification system followed by classification symbols)
   C04B41/80; A61C5/70; A61C13/083; C04B35/488

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/020582 A1 (KURARAY NORITAKE DENTAL INC ) 04 February 2021 (2021-02-04)<br>   paragraphs [0006], [0009], [0011], [0033], [0035], [0040], [0049], [0064], tables 1, 6, 8, example 1 | 1-14 |
| Y | paragraphs [0006], [0009], [0011], [0033], [0035], [0040], [0049], [0064], tables 1, 6, 8, example 1 | 15 |
| Y | BAN, Seiji et al. デジタルデンティストリーにおけるマテリアル選択, 日本補綴歯科学会誌, 2018, vol. 10, no. 3, pp. 209-215<br>   p. 210, right column, line 37 to p. 211, left column, line 3, (Material selection in digital dentistry. Annals of Japan Prosthodontic Society.) | 15 |
| A | | 1-14 |
| Y | JP 2018-080160 A (SHOFU INC) 24 May 2018 (2018-05-24)<br>   paragraph [0049] | 15 |
| A | | 1-14 |

✓ Further documents are listed in the continuation of Box C.    ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/018763** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2018-002495 A (TOSOH CORP) 11 January 2018 (2018-01-11) paragraphs [0065], [0077], [0080], [0082], [0083] | 1-7, 9, 11-14 |
| Y | paragraphs [0008], [0025], [0065], [0077], [0080], [0082], [0083] | 8, 10, 15 |
| X | JP 2021-042119 A (TOSOH CORP) 18 March 2021 (2021-03-18) claims, paragraphs [0135], [0142], [0143], [0145], example 1 | 1-5, 7, 9, 11-15 |
| Y | claims, paragraphs [0135], [0142], [0143], [0145], example 1 | 8, 10 |
| A |  | 6 |

Form PCT/ISA/210 (second sheet) (January 2015)

INTERNATIONAL SEARCH REPORT
Information on patent family members

International application No.

**PCT/JP2022/018763**

| Patent document cited in search report | | | Publication date (day/month/year) | Patent family member(s) | | | Publication date (day/month/year) |
|---|---|---|---|---|---|---|---|
| WO | 2021/020582 | A1 | 04 February 2021 | (Family: none) | | | |
| JP | 2018-080160 | A | 24 May 2018 | US paragraph [0067] | 2018/0125616 | A1 | |
| | | | | EP | 3318218 | A1 | |
| | | | | KR 10-2018-0051401 | | A | |
| JP | 2018-002495 | A | 11 January 2018 | (Family: none) | | | |
| JP | 2021-042119 | A | 18 March 2021 | US paragraphs [0266]-[0269] | 2021/0061717 | A1 | |

Form PCT/ISA/210 (patent family annex) (January 2015)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016026990 A
- WO 2020196650 A
- WO 2012057829 A
- JP 2021076347 A